# EUROPEAN PATENT SPECIFICATION

(11) **EP 4 443 231 B1**
(45) Date of publication and mention of the grant of the patent: **28.10.2026**
(21) Application number: 22923477.8
(22) Date of filing: 06.12.2022
(51) Int. Cl.: G03B 9/06, G03B 30/00, G03B 9/02

(54) **VARIABLE APERTURE, CAMERA MODULE AND ELECTRONIC DEVICE**
VARIABLE BLENDE, KAMERAMODUL UND ELEKTRONISCHE VORRICHTUNG
OUVERTURE VARIABLE, MODULE DE CAMÉRA ET DISPOSITIF ÉLECTRONIQUE

(30) Priority: 30.01.2022 CN 202210114548
(43) Date of publication of application: 09.10.2024
(73) Proprietor: Huawei Technologies Co., Ltd., Shenzhen, Guangdong 518129 (CN)
(72) Inventor: LI, Zhangcheng, Shenzhen, Guangdong 518129 (CN); LI, Sikun, Shenzhen, Guangdong 518129 (CN); WANG, Yiqin, Shenzhen, Guangdong 518129 (CN)
(74) Representative: MERH-IP Matias Erny Reichl Hoffmann Patentanwälte PartG mbB
(86) International application number: PCT/CN2022/136795
(87) International publication number: WO 2023/142686

(56) References cited:
- CN-A- 107 147 831
- CN-A- 110 554 547
- CN-A- 110 602 367
- CN-A- 112 262 566
- CN-A- 113 259 545
- CN-U- 212 115 444
- JP-A- 2003 134 533
- US-A1- 2006 033 974
- US-A1- 2020 301 246

## Description

This application claims priority to Chinese Patent Application No. 202210114548.3, filed with the China National Intellectual Property Administration on January 30, 2022 and entitled "VARIABLE APERTURE, CAMERA MODULE, AND ELECTRONIC DEVICE".

### TECHNICAL FIELD

This application relates to the field of camera technologies, and in particular, to a variable aperture, a camera module, and an electronic device.

### BACKGROUND

In recent years, major manufacturers impose a stricter requirement on imaging quality of a camera module. A light flux that enters a variable aperture can be adjusted by changing a size of an aperture hole of the variable aperture, thereby improving the imaging quality of the camera module. A conventional variable aperture includes a fastening part, a rotation part, a plurality of blades, and an upper cover. When the rotation part rotates relative to the fastening part, the rotation part pushes the plurality of blades to spread and close. The upper cover is fastened to the fastening part, and the upper cover is in fitting with the fastening part to prevent the blade from falling out. However, due to the plastic material of the conventional upper cover, it is prone to be deformed to squeeze the blade, and consequently the blade is deformed and damaged. In this case, a service life of the variable aperture is short.
Document US 2006/033974 A1 relates to a light regulator that includes a substrate having an optical aperture, an even number of blade members (six or more) arranged substantially uniformly around the optical aperture, and spindles provided on the substrate for freely rotatably supporting base end portions of the blade members. The blade members are overlapped with each other at edges thereof, and tip portions thereof face the optical aperture. The blade members on the substrate are divided into a first blade set and a second blade set. The first blade set includes at least two first blade members overlapping with each other. The first blade members are rotatably supported at the base end portions thereof on the spindles, and tip portions of the first blades are placed inside an edge of the optical aperture when the first blades are fully closed.
Document CN 112262566 A relates to a camera module that includes a housing, a lens assembly including at least one lens, an iris diaphragm disposed over the lens and configured to adjust an amount of external light incident on the lens, an iris diaphragm magnet member disposed on a surface of the lens assembly for adjusting a movement of the iris diaphragm, a coil disposed on a surface of the housing facing the iris diaphragm magnet member, at least one sensor disposed on the surface and sensing a magnetic force of the iris diaphragm magnet member, a lens driving unit moving the lens assembly, and control circuitry configured to detect a magnetic force between the moved lens assembly and the surface by using the sensor, determine a position of the lens assembly relative to the surface based at least on the magnetic force, correct a signal for controlling an amount of electric current supplied to the coil according to the position, and adjust an aperture ratio of the iris diaphragm through the iris diaphragm magnet member by using an electromagnetic force output through the coil according to the corrected signal.

### SUMMARY

This application provides a variable aperture with a long life, a camera module, and an electronic device. The present invention is defined by the appended claims. In the following, parts of the description and drawings referring to former embodiments which do not necessarily comprise all features to implement embodiments of the claimed invention are understood to not represent embodiments of the invention but to relate to be examples useful for understanding the embodiments of the invention.

According to a first aspect, an embodiment of this application provides a variable aperture (also referred to as a variable aperture motor). The variable aperture includes a fastening base, a rotation support, a plurality of blades, and a first cover body, where the rotation support is located on an inner side of the fastening base, and is rotationally connected to the fastening base, and the rotation support encloses a space; and the plurality of blades together enclose a light transmission hole, the light transmission hole communicates with the space, and each of the blades is rotationally connected to the fastening base and is slidably connected to the rotation support.

The first cover body is fastened to the fastening base, and is located on a side that is of the blade and that is far away from the fastening base, and a material of the first cover body is a metal material.

It may be understood that the material of the first cover body is set to the metal material, to increase structure strength and an anti-impact capability of the first cover body. In this way, when the variable aperture falls and collides, the first cover body is not easily damaged or deformed, and reliability of the first cover body is better. In addition, the first cover body is not likely to squeeze the blade due to damage or deformation, the blade is not easily damaged or deformed, and reliability of the blade is better. A service life of the variable aperture is long.

In a possible implementation, the first cover body is an aluminum sheet or a steel sheet. It may be understood that the first cover body is the aluminum sheet or the steel sheet. Input costs of the first cover body are low.

In a possible implementation, the first cover body is provided with a fastening hole, the fastening base is provided with a fastening block, and the fastening block is hot-riveted in the fastening hole.

It may be understood that, the fastening block is hot-riveted in the fastening hole, to increase connection firmness between the first cover body and the fastening base, thereby preventing the first cover body from falling out from the fastening base. In this way, because the first cover body and the fastening base may limit the blade through fitting, the blade is not easily detached from the fastening base. A service life of the variable aperture is long. Reliability of the variable aperture is better.

In a possible implementation, the fastening base has a plurality of first bumps disposed at intervals, and the rotation support has a plurality of second bumps disposed at intervals; each of the blades is provided with a rotation hole and a guiding hole that are disposed at intervals, the plurality of first bumps are rotationally connected to the rotation holes of the plurality of blades in a one-to-one correspondence, and the plurality of second bumps are slidably connected to the guiding holes of the plurality of blades in a one-to-one correspondence.

The first cover body is provided with a plurality of first avoidance spaces that are disposed at intervals and a plurality of second avoidance spaces that are disposed at intervals, the plurality of first bumps are disposed in the first avoidance spaces in a one-to-one correspondence, and the plurality of second bumps are disposed in the second avoidance spaces in a one-to-one correspondence.

In a possible implementation, the variable aperture further includes a second cover body, the second cover body fastens the first cover body and is located on a side that is of the first cover body and that is far away from the blade, and the second cover body covers the first avoidance space and the second avoidance space.

It may be understood that, when the second cover body can cover the first avoidance space and the second avoidance space, the second cover body can cover the first bump, the second bump, the rotation hole, and the guiding hole, so that in an assembly process of the camera module, filaments and foreign matter can be prevented from falling into the rotation hole and the guiding hole of the blade in a manufacturing process of the camera module, and do not affect movement of the first bump in the rotation hole and movement of the second bump in the guiding hole. In addition, appearance fineness of the variable aperture is improved.

In a possible implementation, a coating is disposed on each of a top surface, an outer circumferential side surface, and an inner circumferential side surface of the second cover body. In this way, the coating can improve appearance fineness of the variable aperture.

In a possible implementation, the coating may be black or matte black, to shield a device at a bottom of the second cover body.

In a possible implementation, a surface of the coating is provided with an anti-reflection film. The anti-reflection film can eliminate a problem of flare (flare) to a large extent, thereby improving appearance fineness of the variable aperture to a large extent.

In a possible implementation, the variable aperture includes a flexible circuit board, a first magnet, and a first coil.

The flexible circuit board is wound around an outer circumferential side surface of the fastening base and is fastened to the outer circumferential side surface of the fastening base, the first coil is fastened to an inner circumferential side surface of the flexible circuit board and is electrically connected to the flexible circuit board, the first magnet is fastened to an outer circumferential side surface of the rotation support, the first coil faces the first magnet, the first magnet is configured to drive, in fitting with the first coil, the rotation support to rotate relative to the fastening base, and each of the blades slides relative to the rotation support and rotates relative to the fastening base, and a hole diameter of the light transmission hole of the plurality of blades changes.

In this implementation, the first magnet is fastened to the outer circumferential side surface of the rotation support, and the first coil is fastened to the fastening base. Therefore, when the first coil is powered on, an acting force is applied to the first magnet, and the first magnet may drive the rotation support to rotate relative to the fastening base. It may be understood that, in a structure of a driving apparatus including the first magnet and the first coil, a conducting wire does not need to be disposed between the rotation support and the fastening base, and the structure of the driving apparatus including the first magnet and the first coil is simple and tidy. In addition, the first magnet and the first coil do not need to be moved to pull the rotation support for rotation. In this way, the variable aperture does not need to provide additional space for the first magnet and the first coil to move. The first magnet and the first coil occupy small space, which is conductive to miniaturization of the variable aperture.

In this implementation, the first magnet is fastened to the outer circumferential side surface of the rotation support, and the first coil is disposed facing the first magnet. This prevents the first magnet from being stacked with the first coil in a thickness direction of the camera module, and the first magnet, the first coil, the fastening base, and the rotation support can be arranged more compactly. In addition, compared with a solution in which the first coil is tiled on the fastening base, in this implementation, the first coil is vertically fastened to the fastening base. In this way, space of the rotation support in a Z-axis direction can be used, and an area occupied by the first coil in an X-Y plane can be smaller.

In a possible implementation, the flexible circuit board includes a main part and a first reinforcement part, the first reinforcement part is fastened to a surface of a first segment of the main part, and the first coil is fastened to the first segment and is disposed facing the first reinforcement part.

A material of at least a part of the first reinforcement part is a magnetically conductive material, and the first reinforcement part and the first magnet generate a suction force. In this way, the rotation support can be close to a side of the fastening base under the suction force, so that the rotation support can be stably connected to the fastening base. When the rotation support rotates relative to the fastening base, the rotation support is not prone to tilt or shake due to external jitter. The rotation support can further reduce interference caused by a posture difference of a user, and ensure that the rotation support has better connection stability.

In a possible implementation, the fastening base includes a base and a fastening support, and the fastening support is fastened to a top of the base; and the base and the fastening support enclose a first through hole, and the first coil passes through the first through hole and faces the first magnet.

In a possible implementation, the base is provided with a first glue groove, the fastening support is provided with a second glue groove, the first glue groove and the second glue groove are assembled into a first glue storage groove, the first glue storage groove is provided with a glue layer, and the glue layer is further connected to the flexible circuit board.

It may be understood that, when the flexible circuit board is fastened to the fastening base, the flexible circuit board may cover the first glue storage groove. The glue layer is disposed in the first glue storage groove, and the glue layer is connected to the flexible circuit board and a groove wall of the first glue storage groove, thereby further improving connection firmness between the flexible circuit board and the fastening base. In addition, the first glue storage groove is formed by assembling the first glue storage groove of the base and the second glue storage groove of the fastening support. In this way, the glue layer can further enhance connection firmness between the base and the fastening support. The glue layer of this implementation has an effect of "one object for multiple purposes".

In a possible implementation, the base is provided with a first stopper, the first stopper is connected to an inner surface of the base, and the first stopper is in contact with a bottom of the rotation support.

It may be understood that, when the rotation support is located on the inner side of the fastening base, the first stopper can limit movement of the rotation support in a negative direction of a Z axis. In addition, the first cover body can limit movement of the rotation support in a positive direction of the Z axis. In this way, through fitting between the second stopper and the upper cover, a motion of the rotation support can be limited, and shaking of the rotation support is reduced. Therefore, after the variable aperture collides, impact on a gap change between the blade and the upper cover after collision can be alleviated.

In a possible implementation, both the base and the fastening support are an integral mechanical part formed by a metal part and a plastic part. In this way, compared with a base of a plastic structure, the base in this implementation has better structure strength. When the variable aperture falls and collides, the base is not easily damaged or deformed, and reliability of the base is better. In addition, compared with a fastening support of a plastic structure, the fastening support in this implementation has better structure strength. When the variable aperture falls and collides, the fastening support is not easily damaged or deformed, and reliability of the fastening support is better.

In a possible implementation, when the variable aperture is in an initial state, the hole diameter of the aperture hole is the smallest, and a minimum distance between an outer edge of the blade and a step surface of the fastening base is d1, where d1≤50 micrometers, and the step surface faces the aperture hole.

In a possible implementation, d1≤30 micrometers.

In a possible implementation, a width of an overlapping area of two adjacent blades is d2, and the width of the overlapping area is a vertical distance between an inner edge of a first blade and an outer edge of a second blade, where d2≥0.27 millimeters.

In a possible implementation, a distance between an end part that is of the inner edge of the blade and that is close to the aperture hole and an edge of the aperture hole is d3, where d3≥0.1 millimeters. In this way, the aperture hole does not tend to appear in a "wind-and-fire wheel" shape.

In a possible implementation, the variable aperture further includes a first gasket, the first gasket is fastened to the rotation support and is located on a side that is of the plurality of blades and that faces the rotation support, an inner edge of the first gasket encloses a light transmission hole, the light transmission hole of the first gasket communicates the light transmission hole of the plurality of blades with the space of the rotation support.

The variable aperture includes a start state, an intermediate state, and an end state.

When the variable aperture is in the start state or the intermediate state, a maximum hole diameter of the light transmission hole of the plurality of blades is less than a hole diameter of the light transmission hole of the first gasket.

When the variable aperture is in the end state, a minimum hole diameter of the light transmission hole of the plurality of blades is greater than or equal to the hole diameter of the light transmission hole of the first gasket.

In a possible implementation, when the variable aperture is in the end state, a distance between a second end wall of the guiding hole of the blade and the inner edge of the first gasket is d4, where d4≥0.2 millimeters. In this way, light leakage at the guiding hole can be avoided.

In a possible implementation, when the variable aperture is in the end state, a distance between an intersection point of two adjacent blades and the inner edge of the first gasket is d5, where d5≥0.3 millimeters. In this way, light leakage at the intersection point of the two adjacent blades can be avoided.

In a possible implementation, a sensitivity of the guiding hole is sensitivity, a rotation angle of the rotation support is dθ, and when the rotation support rotates relative to the fastening support, a change of the hole diameter of the light transmission hole of the plurality of blades is dD.$Sensitivity = \frac{dD}{dθ} ,$ and sensitivity ≤0.6.

In this way, the guiding hole can overcome a tolerance problem in a preparation process of the guiding hole, thereby ensuring better fitting between the guiding hole and the second bump.

In a possible implementation, the variable aperture further includes a second gasket, and the second gasket is fastened to the upper cover, and is located between the blade and the upper cover. In this way, the second gasket can separate the blade from the upper cover, thereby preventing the upper cover from scratching the blade.

In a possible implementation, the second gasket and the upper cover are an integrated structure.

According to a second aspect, an embodiment of this application provides a camera module. The camera module includes a lens assembly and the foregoing variable aperture, where the variable aperture is fastened to the lens assembly and is located on a light inlet side of the lens assembly. It may be understood that, when the variable aperture is applied to the camera module, the camera module has a longer service life and better reliability.

In a possible implementation, the lens assembly includes a motor and a camera lens, the camera lens is disposed on the motor, and the motor is configured to drive the camera lens to move in an optical axis direction of the camera module; and the variable aperture is fastened to the camera lens and is located on a light inlet side of the camera lens.

According to a third aspect, an embodiment of this application provides an electronic device. The electronic device includes a housing and the foregoing camera module, and the camera module is disposed in the housing. It may be understood that, when the camera module is applied to the electronic device, the electronic device has a longer service life and better reliability.

### BRIEF DESCRIPTION OF DRAWINGS

To describe the technical solutions in embodiments of this application, the following describes the accompanying drawings used in describing embodiments of this application.
FIG. 1 is a schematic diagram of a structure of an implementation of an electronic device according to an embodiment of this application;
FIG. 2 is a partial schematic sectional diagram of the electronic device shown in FIG. 1 at a line A-A;
FIG. 3 is a partial schematic exploded view of a camera module of the electronic device shown in FIG. 1;
FIG. 4 is a partial schematic exploded view of a variable aperture of the camera module shown in FIG. 3;
FIG. 5 is a schematic diagram of a structure of a base shown in FIG. 4 from different angles;
FIG. 6 is a schematic diagram of a structure of a fastening support shown in FIG. 4 from different angles;
FIG. 7 is a schematic diagram of assembly of a base and a fastening support shown in FIG. 4 from an angle;
FIG. 8 is a schematic diagram of assembly of a base and a fastening support shown in FIG. 4 from another angle;
FIG. 9 is a schematic diagram of a structure of a rotation support shown in FIG. 4 from different angles;
FIG. 10 is a schematic diagram of a structure of a part of a variable aperture shown in FIG. 3 from different angles;
FIG. 11 is a partial schematic sectional diagram of a variable aperture shown in FIG. 3;
FIG. 12 is a schematic diagram of assembly of a base, a fastening support, and a roll ball shown in FIG. 4;
FIG. 13 is a schematic diagram of assembly of a rotation support and a roll ball shown in FIG. 4;
FIG. 14 is a schematic diagram of assembly of a flexible circuit board, a first coil, a second coil, and a drive chip shown in FIG. 4 from an angle;
FIG. 15 is a schematic diagram of assembly of a flexible circuit board, a first coil, a second coil, and a drive chip shown in FIG. 4 from another angle;
FIG. 16 is a schematic diagram of a partial structure of a variable aperture shown in FIG. 3;
FIG. 17 is a schematic sectional diagram of the part of the variable aperture shown in FIG. 16 at a line B-B;
FIG. 18 is a schematic diagram of a structure of an implementation in which a second coil and a second magnet shown in FIG. 17 drive a rotation support to rotate;
FIG. 19 is a schematic diagram of a partial structure of a variable aperture shown in FIG. 3;
FIG. 20 is a schematic diagram of a partial structure of a variable aperture shown in FIG. 3;
FIG. 21 is a schematic diagram of a structure of a plurality of blades shown in FIG. 4 from different angles;
FIG. 22 is a schematic diagram of a partial structure of a variable aperture shown in FIG. 3;
FIG. 23 is a schematic diagram of a structure of the part of the variable aperture shown in FIG. 22 from another angle;
FIG. 24 is a schematic diagram of a structure of two blades shown in FIG. 4 corresponding to a case in which a variable aperture is in an intermediate state;
FIG. 25 is a schematic diagram of a position relationship between a plurality of blades shown in FIG. 4 and a first gasket;
FIG. 26 is a schematic diagram of a structure of an upper cover shown in FIG. 4 from different angles;
FIG. 27 is a schematic diagram of a structure of the variable aperture shown in FIG. 23 from another angle;
FIG. 28 is a schematic sectional diagram of another implementation of the upper cover shown in FIG. 26 at a line C-C;
FIG. 29 is a schematic exploded view of another implementation of an upper cover shown in FIG. 4;
FIG. 30 is a partial schematic sectional diagram of another implementation of a variable aperture shown in FIG. 3;
FIG. 31 is a schematic sectional diagram of still another implementation of the variable aperture shown in FIG. 3;
FIG. 32 is a schematic diagram of assembly of a base, a fastening support, and a first fitting part shown in FIG. 31;
FIG. 33 is a schematic diagram of assembly of a partial structure of the variable aperture shown in FIG. 31;
FIG. 34 is a schematic diagram of a structure of a main part of a rotation support and a second fitting part shown in FIG. 31 from another angle;
FIG. 35 is a partial schematic sectional diagram of the variable aperture shown in FIG. 31 in a direction; and
FIG. 36 is a partial schematic sectional diagram of the variable aperture shown in FIG. 31 in another direction.

### DESCRIPTION OF EMBODIMENTS

For ease of understanding, the following first explains and describes English abbreviations and related technical terms in embodiments of this application.

A lens is used as a boundary, and a side of a photographed object is an object side.

The lens is used as the boundary, and a side of an image of the photographed object is an image side.

An optical axis is an axis that runs vertically through a center of the lens. An optical axis of a camera lens is an axis that passes centers of lenses of the camera lens. When light parallel to the optical axis is incident to a convex lens, an ideal convex lens converges all light at one point behind the lens. This point at which all light is converged is a focal point.

The following describes embodiments of this application with reference to the accompanying drawings in embodiments of this application.

In descriptions of embodiments of this application, it should be noted that, unless otherwise specified and limited, a term "connection" shall be understood in a broad sense. For example, "connection" may be a detachable connection, or may be a non-detachable connection, and may be a direct connection, or may be an indirect connection by using an intermediate medium. "Fasten to" means that two ends are connected and a relative position relationship remains unchanged after the connection. "Rotationally connect" means that two ends are connected and can rotate relative to each other after being connected. "Slidably connect" means that two ends are connected and can slide relative to each other after being connected. Orientation terms mentioned in embodiments of this application, for example, "top", "bottom", "inside", "outside", "left", "right", and the like are merely directions based on the accompanying drawings. Therefore, the orientation terms are used to better and more clearly describe and understand embodiments of this application, instead of indicating or implying that a specified apparatus or element needs to have a specific orientation, and be constructed and operated in the specific orientation. Therefore, this cannot be understood as a limitation on embodiments of this application.

In addition, in embodiments of this application, mathematical concepts, for example, "symmetric", "equal", "parallel", "vertical", and the like, are mentioned. These limitations are all for a current process level, but not for absolute strict definitions in a mathematical sense. A small deviation is allowed, and "approximately symmetric", "approximately equal", "approximately parallel", or "approximately vertical" are allowed. For example, A and B being parallel means that A and B are parallel or approximately parallel, and an included angle between A and B may be between 0 degrees and 10 degrees. A being perpendicular to B means that A is perpendicular to B or approximately perpendicular to B, and an included angle between A and B may be between 80 degrees and 100 degrees.

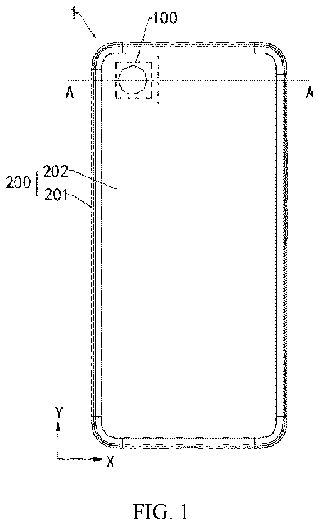

Refer to FIG. 1. FIG. 1 is a schematic diagram of a structure of an implementation of an electronic device 1 according to an embodiment of this application. The electronic device 1 may be a device having a camera function, like a mobile phone, a tablet personal computer (tablet personal computer), a laptop computer (laptop computer), a personal digital assistant (personal digital assistant, PDA), a camera, a personal computer, a notebook computer, a vehicle-mounted device, a wearable device, augmented reality (augmented reality, AR) glasses, an AR helmet, virtual reality (virtual reality, VR) glasses, or a VR helmet. In the embodiment shown in FIG. 1, descriptions are provided by using an example in which the electronic device 1 is a mobile phone.

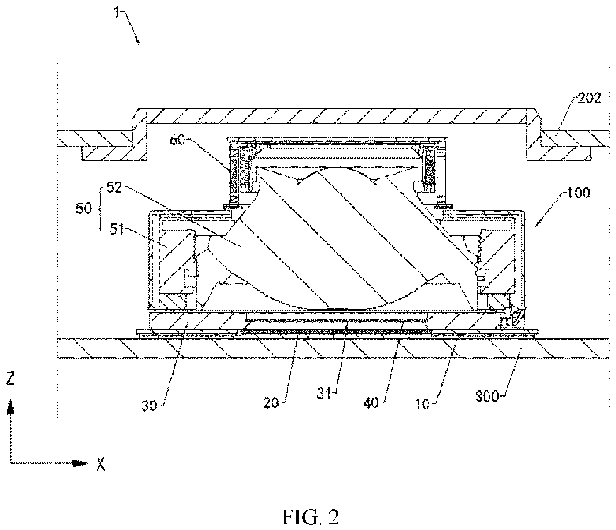

Refer to FIG. 1 and FIG. 2. FIG. 2 is a partial schematic sectional diagram of the electronic device 1 shown in FIG. 1 at a line A-A. The electronic device 1 includes a camera module 100, a housing 200, and a screen 300. It should be noted that FIG. 1, FIG. 2, and the following related accompanying drawings show only some components included in the electronic device 1 as an example. Actual shapes, actual sizes, actual positions, and actual structures of these components are not limited by FIG. 1, FIG. 2, and the following accompanying drawings. In addition, because the camera module 100 is an internal structure of the electronic device 1, FIG. 1 schematically shows the camera module 100 by using dashed lines. For ease of description, a width direction of the electronic device 1000 is defined as an X axis. A length direction of the electronic device 1000 is a Y axis. A thickness direction of the electronic device 1000 is a Z axis. It may be understood that a coordinate system of the electronic device 1000 may be flexibly set based on a specific actual requirement.

In another embodiment, when the electronic device 1 is a device in another form, the electronic device 1 may not include the screen 300.

For example, the housing 200 includes a device frame 201 and a rear cover 202. The rear cover 202 is fastened to a side of the device frame 201. The screen 300 is fastened to a side that is of the device frame 201 and that is far away from the rear cover 202. The screen 300, the device frame 201, and the rear cover 202 together enclose an interior of the electronic device 1. The interior of the electronic device 1 may be configured to place a device of the electronic device 1, for example, a battery, a receiver, a microphone, or the like. The screen 300 is configured to display an image, and the like. The screen 300 may be a planar screen, or may be a curved screen.

In an implementation, the camera module 100 may be disposed in the interior of the electronic device 1. The camera module 100 may be configured to collect ambient light outside the electronic device 1. It may be understood that the camera module 100 may be a rear-facing camera module, a front-facing camera module, or the like. In addition, the camera module 100 may be a vertical camera module (for example, an optical axis direction of the camera module is a Z-axis direction), or may be a periscope camera module (for example, an optical axis direction of the camera module may be any direction on an X-Y plane). FIG. 2 shows that the camera module 100 is the rear-facing camera module and the vertical camera module.

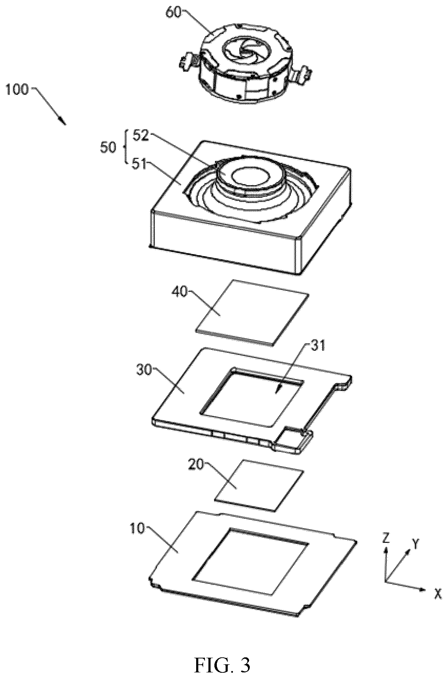

Refer to FIG. 3. FIG. 3 is a partial schematic exploded view of the camera module 100 of the electronic device 1 shown in FIG. 1. In an implementation, the camera module 100 includes a module circuit board 10, a photosensitive chip 20, a support 30, a light filter 40, a lens assembly 50, and a variable aperture 60 (also referred to as a variable aperture motor). The photosensitive chip 20 may also be referred to as an image sensor, or may be referred to as a photosensitive element. The photosensitive chip 20 may be configured to collect ambient light, and convert image information carried in the ambient light into an electrical signal. It should be noted that the optical axis of the camera module 100 includes an optical axis of the variable aperture 60. In this implementation, both the optical axis direction of the camera module 100 and an optical axis direction of the variable aperture 60 are the Z-axis direction.

Refer to FIG. 2 and FIG. 3. In an implementation, the module circuit board 10 may be fastened to a side that is of the screen 300 and that faces the rear cover 202. The photosensitive chip 20 is fastened to the module circuit board 10, and is electrically connected to the module circuit board 10.

In an implementation, the support 30 may be fastened to a side that is of the module circuit board 10 and that is far away from the screen 300. The support 30 and the photosensitive chip 20 are located on a same side of the module circuit board 10. For example, the support 30 may be fastened to the module circuit board 10 by using glue, an adhesive tape, or the like.

In an implementation, the support 30 may be provided with a light transmission hole 31. The light transmission hole 31 passes through two surfaces that are of the support 30 and that are disposed back to back. The light filter 40 is fastened to the support 30, and the light filter 40 is located in the light transmission hole 31. The light filter 40 and the photosensitive chip 20 are disposed facing each other. The light filter 40 may be configured to filter out clutter of ambient light, to ensure that an image photographed by the camera module 100 has better definition. The light filter 40 may be but is not limited to a blue glass light filter. For example, the light filter 40 may alternatively be a reflective infrared light filter, or a dual-pass light filter (the dual-pass light filter may enable both visible light and infrared light in ambient light to pass through, or enable both visible light and light of another specific wavelength (for example, ultraviolet light) in ambient light to pass through, or enable both infrared light and light of another specific wavelength (for example, ultraviolet light) to pass through).

Refer to FIG. 3. The lens assembly 50 may be a fixed-focus lens, or may be an auto focus (Auto Focus, AF) lens, or may be a zoom lens. The lens assembly 50 in this embodiment is described by using an AF lens as an example. The lens assembly 50 includes a motor 51 and a camera lens 52. The camera lens 52 is disposed on the motor 51. The motor 51 is configured to drive the camera lens 52 to move in the optical axis direction (namely, the Z-axis direction) of the camera module 100. The motor 51 may be a voice coil motor, or may be a shape memory alloy (shape memory alloy, SMA) motor. A specific structure of the motor 51 is not limited in this application.

In an implementation, the motor 51 may be fastened to the support 30. The camera lens 52 is located on a side that is of the light filter 40 and that is far away from the photosensitive chip 20. In this way, ambient light may be propagated to the photosensitive chip 20 by using the camera lens 52 and the light filter 40.

Refer to FIG. 2 and FIG. 3. In an implementation, the variable aperture 60 is located on a light inlet side of the camera lens 52 of the lens assembly 50, and is fastened to the camera lens 52 of the lens assembly 50. The variable aperture 60 may be used to increase or decrease a light flux entering the camera lens 52 of the lens assembly 50. For example, when the electronic device 1 performs photographing in a dark light condition, the variable aperture 60 may increase the light flux entering the lens assembly 50. When the electronic device 1 performs photographing in a condition of sufficient light, the variable aperture 60 may decrease the light flux entering the lens assembly 50.

It may be understood that, when a size of an aperture hole of the variable aperture 60 and a position of the aperture hole of the variable aperture 60 relative to the camera lens 52 change, a size of a field of view of the camera lens 52 also changes. In this implementation, the variable aperture 60 is fastened to the camera lens 52, so that when the motor 51 drives the camera lens 52 to move in the Z-axis direction, the variable aperture 60 can also move in the Z-axis direction. In other words, in a process in which the camera lens 52 moves in the Z-axis direction, a position of the variable aperture 60 relative to the camera lens 52 does not change. In this way, when other factors affecting the field of view of the camera lens 52 are not considered, when the position of the aperture hole of the variable aperture 60 relative to the camera lens 52 remains unchanged, the field of view of the camera lens 52 does not change either.

In another embodiment, the variable aperture 60 may be fastened to another component of the lens assembly 50.

In another embodiment, when the lens assembly 50 is the fixed-focus lens, the lens assembly 50 does not include the motor 51. In this case, the variable aperture 60 may be directly fastened to a light inlet side of the fixed-focus lens.

In this implementation, the variable aperture 60 includes a start state, an intermediate state, and an end state. The intermediate state is any state between the start state and the end state. When the variable aperture 60 is in the start state, the aperture hole of the variable aperture 60 is the smallest, and the light flux entering the lens assembly 50 is the smallest. When the variable aperture 60 is in the end state, the aperture hole of the variable aperture 60 is the largest, and the light flux entering the lens assembly 50 is the largest. In the following description, a structure of the variable aperture 60 in the start state is used as an example.

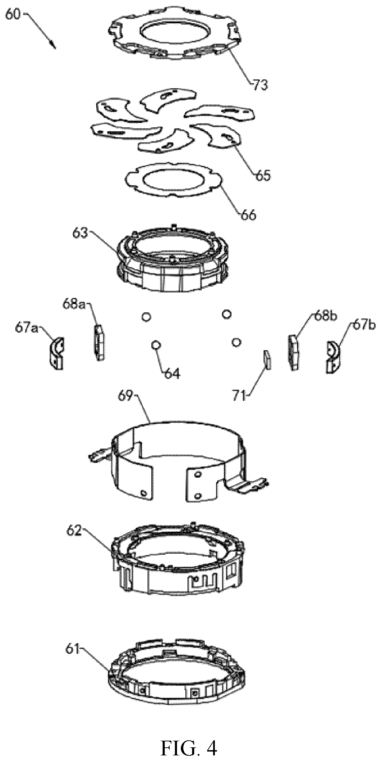

Refer to FIG. 4. FIG. 4 is a partial schematic exploded view of the variable aperture 60 of the camera module 100 shown in FIG. 3. The variable aperture 60 includes a base 61, a fastening support 62, a rotation support 63, a plurality of roll balls 64, a plurality of blades 65, a first gasket 66, a first magnet 67a, a second magnet 67b, a first coil 68a, a second coil 68b, a flexible circuit board 69, a drive chip 71, and an upper cover 73. It should be noted that, in this embodiment, there are four roll balls 64, and the roll balls 64 have a same shape and size. Therefore, each roll ball 64 uses a same number. In another embodiment, a quantity of the roll balls 64 is not limited, and each roll ball 64 may have a different shape and size. In another embodiment, the variable aperture 60 may not include the plurality of roll balls 64.

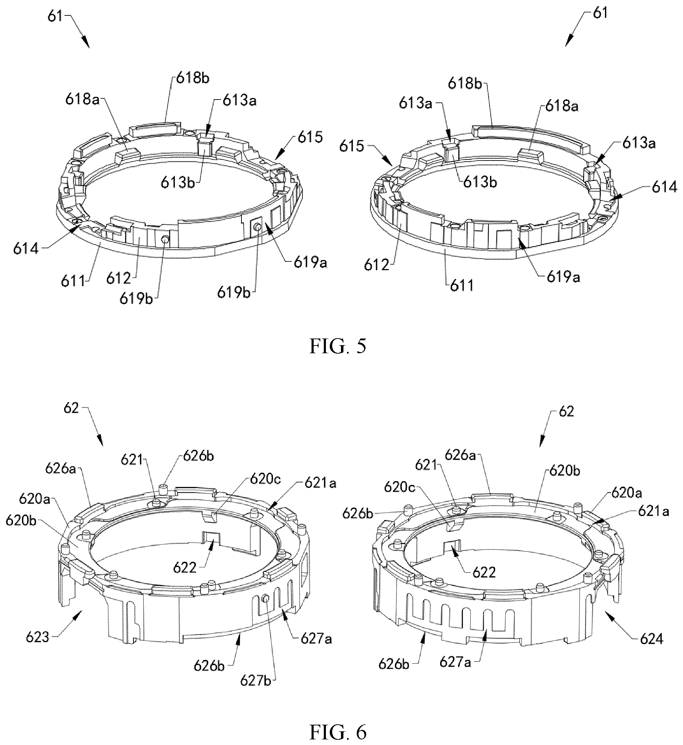

Refer to FIG. 5 with reference to FIG. 4. FIG. 5 is a schematic diagram of a structure of the base 61 shown in FIG. 4 from different angles. In an implementation, the base 61 may include a plastic part and a metal part (for example, a steel sheet). The metal part may be embedded in the plastic part. For example, the base 61 may be formed by using an insert-molding (insert-molding) process. For example, a metal sheet, for example, a steel sheet, is placed in a mold for injection molding. In this way, compared with a base 61 of a plastic structure, the base 61 in this implementation has better structure strength. When the variable aperture 60 falls and collides, the base 61 is not easily damaged or deformed, and reliability of the base 61 is better.

In an implementation, the base 61 includes a bottom wall 611 and a side wall 612. The side wall 612 of the base 61 is fastened to the bottom wall 611 of the base 61. Both the side wall 612 of the base 61 and the bottom wall 611 of the base 61 may be annular.

In an implementation, the side wall 612 of the base 61 may further be provided with a plurality of first recessed areas 613a disposed at intervals. Each first recessed area 613a forms an opening on an inner surface of the side wall 612 of the base 61. In this implementation, a quantity of the first recessed areas 613a is the same as the quantity of the roll balls 64, that is, there are four first recessed areas 613a. The four first recessed areas 613a are sequentially arranged in an annular manner. A 1^{st} first recessed area 613a and a 3^{rd} first recessed area 613a may be disposed facing each other, and a connection line between the 1^{st} first recessed area 613a and the 3^{rd} first recessed area 613a may pass through a central axis of the base 61. A 2^{nd} first recessed area 613a and a 4^{th} first recessed area 613a may be disposed facing each other, and a connection line between the 2^{nd} first recessed area 613a and the 4^{th} first recessed area 613a may pass through the central axis of the base 61. In another implementation, the quantity and a position of the first recessed areas 613a are not specifically limited.

In an implementation, the side wall 612 of the base 61 may further be provided with a plurality of first reinforcement blocks 613b disposed at intervals. The plurality of first reinforcement blocks 613b are disposed in a one-to-one correspondence with the plurality of first recessed areas 613a. The first reinforcement block 613b is located at a periphery of the first recessed area 613a. The first reinforcement block 613b may be connected to a bottom wall of the first recessed area 613a. It may be understood that, when the side wall 612 of the base 61 is provided with the first recessed area 613a, strength of the side wall 612 of the base 61 at the first recessed area 613a is low, and the side wall 612 is easily broken. In this implementation, the first reinforcement block 613b is disposed, so that the strength of the side wall 612 of the base 61 at the first recessed area 613a can be enhanced, thereby preventing the base 61 from breaking.

In an implementation, the side wall 612 of the base 61 further has a first notch 614 and a second notch 615 that are disposed at intervals. The first notch 614 and the second notch 615 may be disposed facing each other. Both the first notch 614 and the second notch 615 may communicate an inner space of the base 61 with an outer space of the base 61.

In an implementation, the side wall 612 of the base 61 is provided with a plurality of first stoppers 618a disposed at intervals. The plurality of first stoppers 618a are all connected to the inner surface of the side wall 612 of the base 61. A quantity of the first stoppers 618a is not limited to six shown in FIG. 5. For example, top surfaces of all the first stoppers 618a are located in a same plane. The top surface of the first stopper 618a is a surface that is of the first stopper 618a and that is far away from the bottom wall 611 of the base 61.

In an implementation, the side wall 612 of the base 61 is provided with a plurality of first protrusions 618b disposed at intervals. The plurality of first protrusions 618b are all connected to a top surface of the side wall 612 of the base 61. A quantity of the first protrusions 618b is not limited to three shown in FIG. 5. For example, each first protrusion 618b may be provided with a glue groove.

In an implementation, the side wall 612 of the base 61 is provided with a plurality of first glue grooves 619a disposed at intervals. An opening of each first glue groove 619a is located on an outer surface of the side wall 612 of the base 61.

In an implementation, the side wall 612 of the base 61 is provided with a plurality of first positioning blocks 619b disposed at intervals. The plurality of first positioning blocks 619b are connected to the outer surface of the side wall 612 of the base 61. A quantity of the first positioning blocks 619b is not limited to two shown in FIG. 5. A shape of the first positioning block 619b may be a column.

Refer to FIG. 6 with reference to FIG. 4. FIG. 6 is a schematic diagram of a structure of the fastening support 62 shown in FIG. 4 from different angles. In an implementation, a material of the fastening support 62 may include a plastic part and a metal part (for example, a steel sheet). The metal part may be embedded in the plastic part. For example, the fastening support 62 may be formed by using an insert-molding (insert-molding) process. For example, a metal material, for example, a steel sheet, is placed in a mold for injection molding. In this way, compared with a fastening support of a plastic structure, the fastening support 62 in this implementation has better structure strength. When the variable aperture 60 falls and collides, the fastening support 62 is not easily damaged or deformed, and reliability of the fastening support 62 is better.

In an implementation, the fastening support 62 may be annular. The fastening support 62 includes an outer ring part 620a and an inner ring part 620b. The inner ring part 620b is connected to an inner surface of the outer ring part 620a. For example, a top surface of the outer ring part 620a and a top surface of the inner ring part 620b may form a step shape. In other words, in the Z-axis direction, a height of the top surface of the outer ring part 620a is greater than a height of the top surface of the inner ring part 620b.

In an implementation, the fastening support 62 further includes a plurality of second reinforcement blocks 620c disposed at intervals. The second reinforcement block 620c is connected to the inner surface of the outer ring part 620a and a bottom surface of the inner ring part 620b. The second reinforcement block 620c can enhance connection firmness between the inner ring part 620b and the outer ring part 620a.

In an implementation, the inner circumferential side surface 621a of the outer ring part 620a faces an aperture hole 650. The inner circumferential side surface 621a of the outer ring part 620a is a step surface of the fastening support 62.

In an implementation, the inner ring part 620b of the fastening support 62 is provided with a plurality of first bumps 621 disposed at intervals. The plurality of first bumps 621 may be arranged in an annular manner. For example, there are six first bumps 621. A first protrusion part 625a and a second protrusion part 625b are disposed around each first bump 621.

In an implementation, the fastening support 62 is further provided with a plurality of second recessed areas 622 disposed at intervals. Each second recessed area 622 forms an opening on an inner surface of the fastening support 62. In this implementation, a quantity of the second recessed areas 622 is the same as the quantity of the roll balls 64, that is, there are four second recessed areas 622. The four second recessed areas 622 are sequentially arranged in an annular manner. A 1^{st} second recessed area 622 and a 3^{rd} second recessed area 622 may be disposed facing each other, and a connection line between the 1^{st} second recessed area 622 and the 3^{rd} second recessed area 622 may pass through a central axis of the fastening support 62. A 2^{nd} second recessed area 622 and a 4^{th} second recessed area 622 may be disposed facing each other, and a connection line between the 2^{nd} second recessed area 622 and the 4^{th} second recessed area 622 may pass through the central axis of the fastening support 62. In another implementation, the quantity and a position of the second recessed areas 622 are not specifically limited.

In an implementation, the outer ring part 620a of the fastening support 62 is further provided with a third notch 623 and a fourth notch 624 that are disposed at intervals. The third notch 623 and the fourth notch 624 are disposed facing each other. Both the third notch 623 and the fourth notch 624 may communicate an inner space of the fastening support 62 with an outer space of the fastening support 62.

In an implementation, the outer ring part 620a of the fastening support 62 is provided with a plurality of second stoppers 626a disposed at intervals. All of the plurality of second stoppers 626a may be connected to the top surface of the outer ring part 620a. A quantity of the second stoppers 626a is not limited to six shown in FIG. 5. For example, top surfaces of all the second stoppers 626a are located in a same plane. The top surface of the second stopper 626a is a surface that is of the second stopper 626a and that is far away from the outer ring part 620a of the fastening support 62.

In an implementation, the outer ring part 620a of the fastening support 62 is provided with a plurality of fastening blocks 626b disposed at intervals. All of the fastening blocks 626b may be connected to the top surface of the outer ring part 620a. A quantity of the fastening blocks 626b is not limited to four shown in FIG. 6. A shape of the fastening block 626b may be a column.

In an implementation, the outer ring part 620a of the fastening support 62 is provided with a plurality of first grooves 626b disposed at intervals. Openings of the plurality of first grooves 626b are located on a bottom surface of the outer ring part 620a of the fastening support 62. A quantity of the first grooves 626b is not limited to three shown in FIG. 6. For example, a groove wall of each first grooves 626b may be provided with a glue groove.

In an implementation, the outer ring part 620a of the fastening support 62 is provided with a plurality of second glue grooves 627a disposed at intervals. An opening of each second glue groove 627a is located on an outer surface of the outer ring part 620a of the fastening support 62.

In an implementation, the outer ring part 620a of the fastening support 62 is provided with a second positioning block 627b. The second positioning block 627b is connected to the outer surface of the outer ring part 620a of the fastening support 62. A quantity of second positioning blocks 627b is not limited to one shown in FIG. 6. When there are a plurality of second positioning blocks 627b, the plurality of second positioning blocks 627b are disposed at intervals. A shape of the second positioning block 627b may be a column.

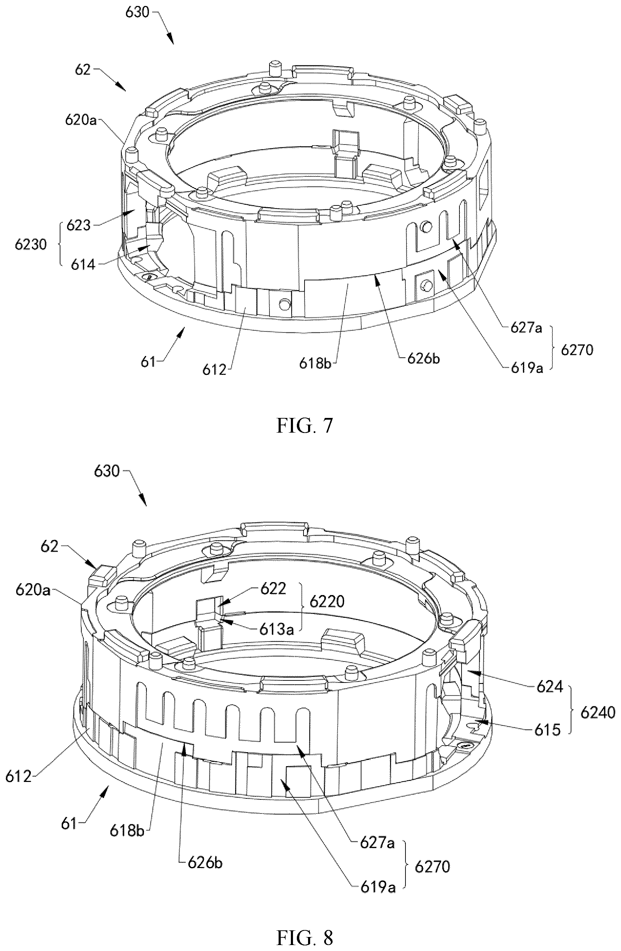

Refer to FIG. 7 with reference to FIG. 5 and FIG. 6. FIG. 7 is a schematic diagram of assembly of the base 61 and the fastening support 62 shown in FIG. 4 from an angle. In an implementation, the outer ring part 620a of the fastening support 62 is fastened to the side wall 612 of the base 61. The base 61 and the fastening support 62 form a fastening base 630.

In an implementation, the fastening support 62 may be connected to the base 61 by using a mortise-and-tenon process. In addition, a glue layer may be disposed at a connection position between the fastening support 62 and the base 61, to further improve connection firmness between the fastening support 62 and the base 61.

Refer to FIG. 7 and FIG. 8. FIG. 8 is a schematic diagram of assembly of the base 61 and the fastening support 62 shown in FIG. 4 from another angle. In an implementation, when the fastening support 62 fastens the base 61, the plurality of first protrusions 618b of the base 61 are inserted into the plurality of first grooves 626b of the fastening support 62 in a one-to-one correspondence. The first protrusion 618b may be in interference fitting with the groove wall of the first groove 626b. It can be understood that, through fitting between the first protrusion 618b and the first groove 626b, connection firmness between the fastening support 62 and the base 61 can be improved, thereby ensuring that the fastening support 62 and the base 61 have better stability. In an implementation, a structure of the first protrusion 618b may be a steel sheet. In this way, connection firmness between the fastening support 62 and the base 61 can be improved, and strength between the fastening support 62 and the base 61 can be improved.

In an implementation, when the fastening support 62 fastens the base 61, a glue layer is disposed in the glue groove of the first protrusion 618b and the glue groove of the first groove 626b, to further improve connection firmness between the fastening support 62 and the base 61, thereby further ensuring that the fastening support 62 and the base 61 have better stability.

In an implementation, the plurality of first recessed areas 613a and the plurality of second recessed areas 622 are assembled into rotation grooves 6220 in a one-to-one correspondence, that is, one first recessed area 613a and one second recessed area 622 are assembled into one rotation groove 6220.

In an implementation, the first notch 614 and the third notch 623 are assembled into a first through hole 6230. The second notch 615 and the fourth notch 624 are assembled into a second through hole 6240.

The plurality of first glue grooves 619a and the plurality of second glue grooves 627a are assembled into first glue storage grooves 6270 in a one-to-one correspondence, that is, one first glue groove 619a and one second glue groove 627a are assembled into one first glue storage groove 6270. There may be a plurality of first glue storage grooves 6270.

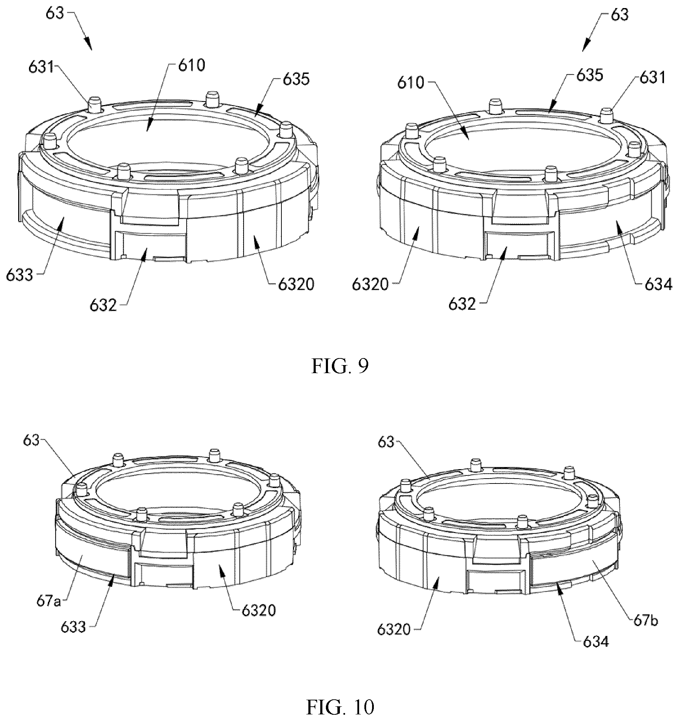

Refer to FIG. 9. FIG. 9 is a schematic diagram of a structure of the rotation support 63 shown in FIG. 4 from different angles. In an implementation, the rotation support 63 may be annular. The rotation support 63 encloses a space 610. A top of the rotation support 63 has a plurality of second bumps 631 disposed at intervals. The plurality of second bumps 631 may be arranged in an annular manner. For example, there are six second bumps 631. The second bump 631 may be of a column structure.

For example, the rotation support 63 is further provided with a plurality of roll grooves 632 disposed at intervals. The plurality of roll grooves 632 are distributed in an annular manner. The roll groove 632 is in a long strip shape. The roll groove 632 extends in a circumferential direction (that is, a circumferential direction, a direction surrounding an axis of the rotation support 63) of the rotation support 63. In this implementation, a quantity of the roll grooves 632 is the same as the quantity of the roll balls 64 (refer to FIG. 4), that is, there are four roll grooves 632. In another implementation, the quantity of the roll grooves 632 is not limited.

For example, the rotation support 63 is further provided with a first installation groove 633 and a second installation groove 634 that are disposed at intervals. The first installation groove 633 and the second installation groove 634 are formed by recessing of an outer circumferential side surface 630a of the rotation support 63 toward a center of the rotation support 63. The first installation groove 633 and the second installation groove 634 are further disposed at intervals with each roll groove 632. The outer circumferential side surface 630a of the rotation support 63 is connected to a top surface and a bottom surface of the rotation support 63. The outer circumferential side surface 630a of the rotation support 63 may be parallel to the optical axis direction of the variable aperture 60.

For example, the rotation support 63 is further provided with a plurality of second glue storage grooves 635 disposed at intervals. An opening of the second glue storage groove 635 is located on the top surface of the rotation support 63. A quantity of the second glue storage grooves 635 is not limited to six shown in FIG. 10.

It may be understood that the rotation support 63 may be a symmetric structure, a partially symmetric structure, or an asymmetric structure. In this implementation, the rotation support 63 is the symmetric structure.

Refer to FIG. 10 with reference to FIG. 9. FIG. 10 is a schematic diagram of a structure of the part of the variable aperture 60 shown in FIG. 3 from different angles. The first magnet 67a may be fastened to the first installation groove 633 of the rotation support 63 in an adhesive manner or the like. For example, the first magnet 67a is in an arc shape. A shape of the first magnet 67a adapts to a shape of the first installation groove 633. In this way, when the first magnet 67a is fastened to the first installation groove 633, the first magnet 67a may be embedded in the rotation support 63. In this way, a structure including the first magnet 67a and the rotation support 63 has better integrity. In addition, the first magnet 67a and the rotation support 63 have overlapping areas in all directions, and the first magnet 67a does not tend to increase a size of the variable aperture 60 additionally. In another implementation, the first magnet 67a may be embedded in the rotation support 63 by using an injection molding processing process.

The second magnet 67b may be fastened to the second installation groove 634 of the rotation support 63 in an adhesive manner or the like. For example, the second magnet 67b is in an arc shape. A shape of the second magnet 67b adapts to a shape of the second installation groove 634. In this way, when the second magnet 67b is fastened to the second installation groove 634, the second magnet 67b may be embedded in the rotation support 63. In this way, a structure including the second magnet 67b and the rotation support 63 has better integrity. In addition, the second magnet 67b and the rotation support 63 have overlapping areas in all directions, and the second magnet 67b does not tend to increase the size of the variable aperture 60 additionally. In another implementation, the second magnet 67b may be embedded in the rotation support 63 by using an injection molding processing process.

For example, the first magnet 67a and the second magnet 67b are symmetric relative to the center of the rotation support 63. In this way, when the first magnet 67a and the second magnet 67b are fastened to the rotation support 63, symmetry of a structure including the first magnet 67a, the second magnet 67b, and the rotation support 63 is better. In this case, when the first magnet 67a, the second magnet 67b, and the rotation support 63 are in fitting with another component, the first magnet 67a, the second magnet 67b, and the rotation support 63 are not likely to tilt due to unstable gravity centers.

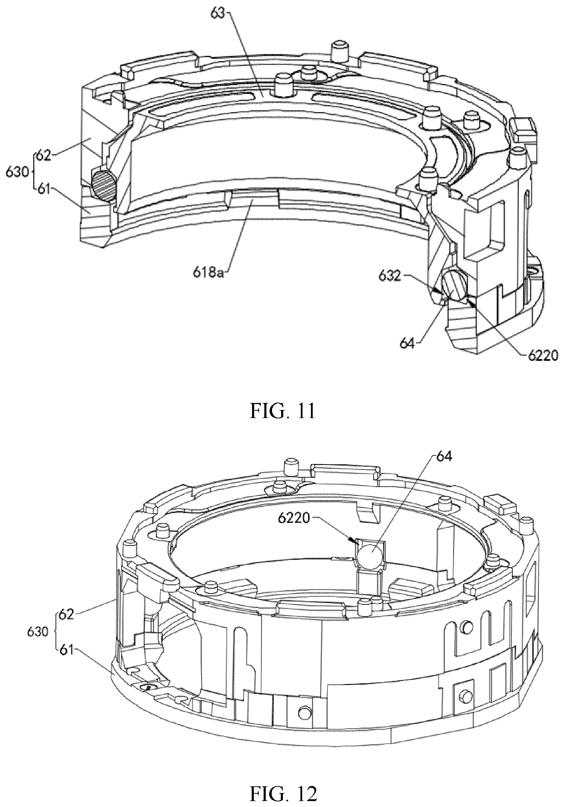

Refer to FIG. 11 with reference to FIG. 8 and FIG. 9. FIG. 11 is a partial schematic sectional diagram of the variable aperture 60 shown in FIG. 3. In an implementation, the rotation support 63 is disposed on an inner side of the base 61 and an inner side of the fastening support 62, that is, located on an inner side of the fastening base 630. It may be understood that, that the rotation support 63 is located on the inner side of the fastening base 630 includes that a projection of the rotation support 63 on a reference plane at least partially overlaps a projection of the fastening base 630 on the reference plane. The reference plane is parallel to the optical axis direction of the variable aperture 60, namely, the Z-axis direction.

In addition, the rotation support 63 is rotationally connected to the base 61 and the fastening support 62, that is, the rotation support 63 is rotationally connected to the fastening base 630. The plurality of rotation grooves 6220 and the plurality of roll grooves 632 are disposed facing each other in a one-to-one correspondence, and are assembled into a movable space. That is, one rotation groove 6220 and one roll groove 632 are disposed facing each other, and are assembled into a movable space. One part of the roll ball 64 is disposed in the rotation groove 6220, and the other part of the roll ball 64 is located in the roll groove 632.

Refer to FIG. 12 with reference to FIG. 11. FIG. 12 is a schematic diagram of assembly of the base 61, the fastening support 62, and the roll ball 64 shown in FIG. 4. A length and a width of the rotation groove 6220 are set, so that a groove side wall of the rotation groove 6220 can abut against the roll ball 64 in various directions. In this way, when the rotation support 63 rotates relative to the fastening base 630, the groove side wall of the rotation groove 6220 may limit the roll ball 64 to roll relative to the rotation groove 6220 in various directions, so that the roll ball 64 can rotate in the rotation groove 6220.

In an implementation, lubricating oil is disposed between the roll ball 64 and the rotation groove 6220. The lubricating oil can reduce friction between the roll ball 64 and the rotation groove 6220.

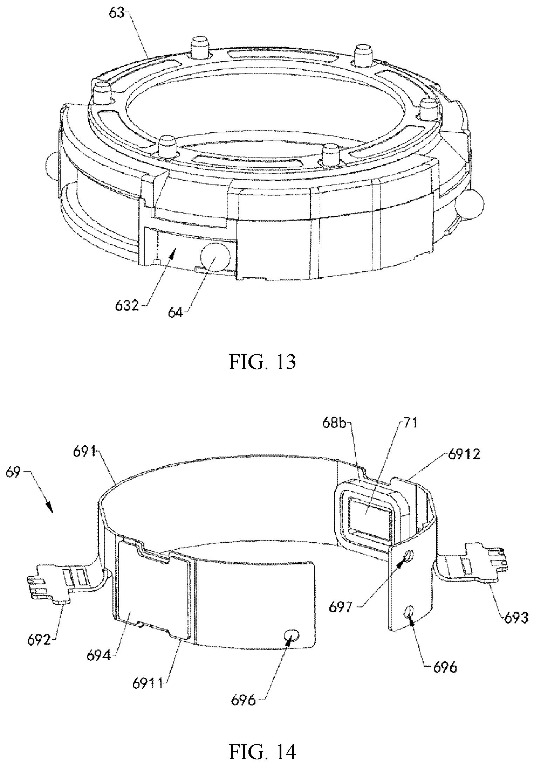

Refer to FIG. 13 with reference to FIG. 11. FIG. 13 is a schematic diagram of assembly of the rotation support 63 and the roll ball 64 shown in FIG. 4. The length and the width of the roll groove 632 are set, so that a side wall of the roll groove 632 in a width direction can abut against the roll ball 64. In this way, when the rotation support 63 rotates relative to the fastening base 630, the side wall of the roll groove 632 in the width direction may limit the roll ball 64 to roll in the width direction of the roll groove 632. In addition, a side wall of the roll groove 632 in a length direction does not abut against the roll ball 64. In this way, when the rotation support 63 rotates relative to the fastening base 630, the roll ball 64 can roll in the length direction of the roll groove 632.

In an implementation, lubricating oil may also be disposed between the roll ball 64 and the roll groove 632. The lubricating oil can reduce friction between the roll ball 64 and the roll groove 632.

Refer to FIG. 11 again. When the rotation support 63 is located on the inner side of the fastening base 630, the rotation support 63 may be in contact with the first stopper 618a of the base 61. It may be understood that, a surface that is of the first stopper 618a and that is far away from the rotation support 63 may be used as a first impact surface. When the variable aperture 60 (refer to FIG. 2) is applied to the camera module 100 (refer to FIG. 2), if the variable aperture 60 collides with another component of the camera module 100, the bottom surface of the rotation support 63 does not easily collide with the another component of the camera module 100. In this case, neither the rotation support 63 nor the roll ball 64 is easily deformed due to a force, thereby ensuring that the variable aperture 60 has better reliability. In another implementation, the rotation support 63 may alternatively be disposed at intervals from the first stopper 618a of the base 61.

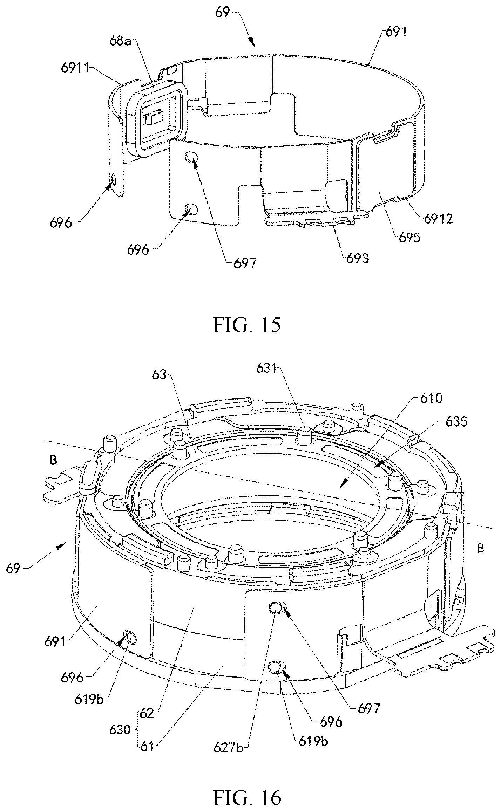

Refer to FIG. 14 and FIG. 15. FIG. 14 is a schematic diagram of assembly of the flexible circuit board 69, the first coil 68a, the second coil 68b, and the drive chip 71 shown in FIG. 4 from an angle. FIG. 15 is a schematic diagram of assembly of the flexible circuit board 69, the first coil 68a, the second coil 68b, and the drive chip 71 shown in FIG. 4 from another angle. In an implementation, the flexible circuit board 69 includes a main part 691, a first extension part 692, and a second extension part 693. The first extension part 692 and the second extension part 693 are connected to the main part 691 at intervals.

In an implementation, the main part 691 is provided with a first positioning hole 696. The first positioning hole 696 is disposed close to a bottom of the main part 691. A quantity of the first positioning holes 696 is not limited to two shown in FIG. 14 and FIG. 15.

In an implementation, the main part 691 is provided with a second positioning hole 697. The second positioning hole 697 is disposed close to a top of the main part 691. A quantity of the second positioning holes 697 is not limited to one shown in FIG. 14 and FIG. 15.

In an implementation, the main part 691 may include a first segment 6911 and a second segment 6912 that are disposed at intervals. The first segment 6911 and the second segment 6912 may be in a planar shape.

In an implementation, the first coil 68a is fastened to the first segment 6911 of the main part 691 of the flexible circuit board 69, and is located on an inner circumferential side surface of the main part 691. The first coil 68a is further electrically connected to the flexible circuit board 69. The second coil 68b is fastened to the second segment 6912 of the main part 691 of the flexible circuit board 69, and is located on the inner circumferential side surface of the main part 691. The second coil 68b is further electrically connected to the flexible circuit board 69. For example, both the first segment 6911 and the second segment 6912 are disposed in the planar shape, so that the first coil 68a is fastened to the main part 691, and the second coil 68b is fastened to the main part 691.

In an implementation, the flexible circuit board 69 includes a first reinforcement part 694. A material of the first reinforcement part 694 may be a metal material. The first reinforcement part 694 may be fastened to the first segment 6911 of the main part 691. The first reinforcement part 694 is located on a surface that is of the first segment 6911 and that is far away from the first coil 68a. The first reinforcement part 694 and the first coil 68a are disposed facing each other. It may be understood that the first reinforcement part 694 can improve strength of the first segment 6911 of the main part 691.

In an implementation, the first reinforcement part 694 includes two parts. A material of one part is a magnetically conductive material, and a material of the other part is a non-magnetically conductive material. In an implementation, the material of the first reinforcement part 694 may be a magnetically conductive material.

In an implementation, the flexible circuit board 69 includes a second reinforcement part 695. A material of the second reinforcement part 695 may be a metal material. The second reinforcement part 695 may be fastened to the second segment 6912 of the main part 691. The second reinforcement part 695 is located on a surface that is of the second segment 6912 and that is far away from the second coil 68b. The second reinforcement part 695 and the second coil 68b are disposed facing each other. It may be understood that the second reinforcement part 695 can improve strength of the second segment 6912 of the main part 691.

In an implementation, the second reinforcement part 695 includes two parts. A material of one part is a magnetically conductive material, and a material of the other part is a non-magnetically conductive material. In an implementation, the material of the second reinforcement part 695 may be a magnetically conductive material.

In an implementation, the drive chip 71 may be fastened to the main part 691 of the flexible circuit board 69 in a soldering manner or the like. The drive chip 71 is further electrically connected to the first coil 68a and the second coil 68b. The drive chip 71 is configured to supply power to the first coil 68a and the second coil 68b. In this implementation, the drive chip 71 is electrically connected to the flexible circuit board 69, and is electrically connected to the first coil 68a and the second coil 68b through the flexible circuit board 69.

For example, the drive chip 71 may be located on the inner circumferential side surface of the main part 691 of the flexible circuit board 69, and is located in an area surrounded by the second coil 68b. In this way, the drive chip 71 and the second coil 68b are arranged more compactly on the flexible circuit board 69, thereby facilitating miniaturization of the variable aperture 60.

In an implementation, the variable aperture 60 further includes a heat sink (not shown in the figure). The heat sink is fastened to the second coil 68b. The drive chip 71 is located in a space enclosed by the heat sink, the second coil 68b, and the second segment 6912 of the main part 691. The heat sink may be configured to dissipate heat for the drive chip 71 when the drive chip 71 is in a working state, to ensure that the drive chip 71 has better reliability.

Refer to FIG. 16 with reference to FIG. 14 and FIG. 15. FIG. 16 is a schematic diagram of a partial structure of the variable aperture 60 shown in FIG. 3. In an implementation, the main part 691 of the flexible circuit board 69 is disposed around an outer circumferential side surface of the fastening base 630. The main part 691 of the flexible circuit board 69 may be fastened to the outer circumferential side surface of the fastening base 630 in a bonding manner or the like. In this way, the main part 691 and the fastening base 630 of the flexible circuit board 69 are arranged in a compact manner. The main part 691 of the flexible circuit board 69 occupies small space, which is conducive to miniaturization of the variable aperture 60.

In an implementation, when the main part 691 is fastened to the fastening base 630, the main part 691 covers the first glue storage groove 6270 (FIG. 7 and FIG. 8 show the first glue storage groove 6270 at different angles). A glue layer is disposed in the first glue storage groove 6270, and the glue layer is connected to the main part 691 and a groove wall of the first glue storage groove 6270. In this way, connection firmness between the flexible circuit board 69 and the fastening base 630 is further improved. In addition, the first glue storage groove 6270 is formed by assembling the first glue storage groove 619a of the base 61 and the second glue storage groove 627a of the fastening support 62. In this way, the glue layer can further enhance connection firmness between the base 61 and the fastening support 62. It may be understood that the glue layer of this implementation has an effect of "one object for multiple purposes".

In an implementation, when the main part 691 is fastened to the fastening base 630, the first positioning block 619b of the base 61 is inserted into the first positioning hole 696 of the main part 691. When there are a plurality of first positioning blocks 619b and a plurality of first positioning holes 696, the plurality of first positioning blocks 619b are inserted into the first positioning holes 696 in a one-to-one correspondence, that is, one first positioning block 619b is inserted into one first positioning hole 696. In this way, connection firmness between the main part 691 and the fastening base 630 is improved. In addition, through fitting between the first positioning block 619b and the first positioning hole 696, the flexible circuit board 69 can be accurately positioned. In an implementation, a glue layer is disposed in the first positioning hole 696, and the glue layer connects the first positioning block 619b to a hole wall of the first positioning hole 696, thereby further improving connection firmness between the flexible circuit board 69 and the fastening base 630.

In an implementation, when the main part 691 is fastened to the fastening base 630, the second positioning block 627b of the fastening support 62 may be inserted into the second positioning hole 697 of the main part 691. When there are a plurality of second positioning blocks 627b, the plurality of second positioning blocks 627b are inserted into the second positioning holes 697 in a one-to-one correspondence, that is, one second positioning block 627b is inserted into one second positioning hole 697. In this way, connection firmness between the main part 691 and the fastening base 630 is improved. In addition, through fitting between the second positioning block 627b and the second positioning hole 697, the flexible circuit board can be accurately positioned. In an implementation, a glue layer is disposed in the second positioning hole 697, and the glue layer connects the second positioning block 627b to a hole wall of the second positioning hole 697, thereby further improving connection firmness between the flexible circuit board 69 and the fastening base 630.

In an implementation, the first extension part 692 and the second extension part 693 of the flexible circuit board 69 are configured to be electrically connected to an external device of the variable aperture 60. For example, the first extension part 692 and the second extension part 693 of the flexible circuit board 69 may be electrically connected to the module circuit board 10 (refer to FIG. 3) by using cables in some components (for example, a motor or a support of the lens assembly) of the camera module 100. In this way, the drive chip 71 may be electrically connected to the module circuit board 10 by using the flexible circuit board 69, that is, the module circuit board 10 may transmit an electrical signal to the drive chip 71 by using the flexible circuit board 69.

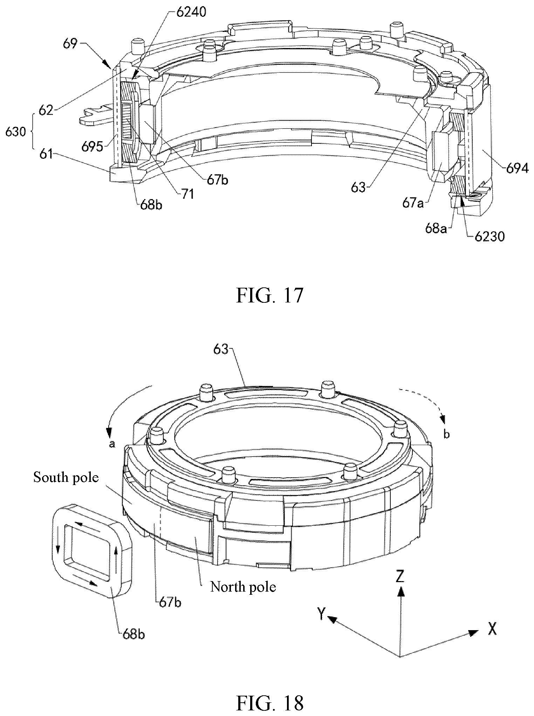

Refer to FIG. 17. FIG. 17 is a schematic sectional diagram of the part of the variable aperture 60 shown in FIG. 16 at a line B-B. The first coil 68a may be disposed facing the first magnet 67a by using the first through hole 6230. The first coil 68a and the first magnet 67a are disposed facing each other. The second coil 68b may be disposed facing the second magnet 67b by using the second through hole 6240. The second coil 68b and the second magnet 67b are disposed facing each other. It should be understood that, that the first coil 68a faces the first magnet 67a may be that a plane in which the first coil 68a is located is disposed face to face with the first magnet 67a. In this implementation, both the plane in which the first coil 68a is located and a plane in which the first magnet 67a is located are parallel to the optical axis direction of the variable aperture 60. The plane in which the first coil 68a is located may be perpendicular to an axis of a wound line of the first coil 68a. That the second coil 68b faces the second magnet 67b may be that a plane in which the second coil 68b is located is disposed face to face with the second magnet 67b. In this implementation, both the plane in which the second coil 68b is located and the plane in which the second magnet 67b is located are parallel to the optical axis direction of the variable aperture 60. The plane in which the second coil 68b is located may be perpendicular to an axis of a wound line of the second coil 68b.

In this implementation, the first coil 68a is located in the first through hole 6230. The second coil 68b is located in the second through hole 6240. In this way, the first coil 68a and the second coil 68b have overlapping areas with the fastening base 630 in all directions. In this case, the first coil 68a and the second coil 68b may use space in which the fastening base 630 is located, and the first coil 68a and the second coil 68b do not additionally increase the size of the variable aperture 60, which is conducive to miniaturization of the variable aperture 60.

In another implementation, the first coil 68a may alternatively be located outside the first through hole 6230. The second coil 68b may alternatively be located outside the second through hole 6240.

In another implementation, positions of the first magnet 67a and the first coil 68a may be exchanged. Positions of the second magnet 67b and the second coil 68b may also be exchanged.

In this implementation, when the drive chip 71 receives a signal, the drive chip 71 may transmit a current signal to the first coil 68a and the second coil 68b by using the flexible circuit board 69. When there is a current signal in the first coil 68a, the first coil 68a and the first magnet 67a may generate forces acting on each other. In this way, when an acting force is applied to the first magnet 67a, the first magnet 67a can drive the rotation support 63 to rotate relative to the base 61 and the fastening support 62. Further, when there is a current signal in the second coil 68b, the second coil 68b and the second magnet 67b may generate forces acting on each other. In this way, when an acting force is applied to the second magnet 67b, the second magnet 67b can drive the rotation support 63 to rotate relative to the fastening support 62 and the base 61.

It may be understood that a direction of a force applied to the first magnet 67a is changed by changing magnetic positions (namely, a position of a south pole and a north pole of the first magnet 67a) of the first magnet 67a or a direction of a current signal in the first coil 68a, to change a rotation direction of the rotation support 63. In addition, a direction of a force applied to the second magnet 67b is changed by changing magnetic positions (namely, positions of a south pole and a north pole of the second magnet 67b) of the second magnet 67b or a direction of a current signal in the second coil 68b, to further change the rotation direction of the rotation support 63. In this implementation, a direction in which the first magnet 67a drives the rotation support 63 to rotate relative to the fastening support 62 and the base 61 is the same as a direction in which the second magnet 67b drives the rotation support 63 to rotate relative to the fastening support 62 and the base 61. In this case, the first magnet 67a and the second magnet 67b may jointly drive the rotation support 63 to rotate relative to the fastening support 62 and the base 61 in a first direction a (the direction is indicated by a solid line with an arrow in FIG. 16), or in a second direction b (the direction is indicated by a dashed line with an arrow in FIG. 16).

Refer to FIG. 18. FIG. 18 is a schematic diagram of a structure of an implementation in which the second coil 68b and the second magnet 67b shown in FIG. 17 drive the rotation support 63 to rotate. A direction of a current in the second coil 68b is a counter-clockwise direction on a Y-Z plane. The direction is represented by a solid line with an arrow in FIG. 18. The second magnet 67b includes a south pole (S pole) and a north pole (N pole). A polarization direction (that is, a direction in which the south pole of the second magnet 67b points to the north pole of the second magnet 67b, or a direction in which the north pole of the second magnet 67b points to the south pole of the second magnet 67b) of the second magnet 67b in this implementation may be a Y-axis direction. For example, the direction in which the south pole of the second magnet 67b faces the north pole of the second magnet 67b may be disposed in parallel to a circumferential direction of the rotation support 63. In this case, an ampere force may be applied to the second magnet 67b in a negative direction of the Y-axis, and the second magnet 67b can drive the rotation support 63 to rotate in the first direction a. It may be understood that, the direction of the current in the second coil 68b may be changed (for example, the counter-clockwise direction is changed to a clockwise direction), or arrangement positions of the south pole and the north pole of the second magnet 67b may be changed, so that the second magnet 67b can drive the rotation support 63 to rotate in the second direction b.

In an implementation, when the first magnet 67a and the second magnet 67b jointly drive the rotation support 63 to rotate, because the first magnet 67a and the second magnet 67b are symmetric relative to the center of the rotation support 63, acting forces that are from the first magnet 67a and the second magnet 67b and that are applied to the rotation support 63 at all positions are relatively balanced. In this way, the rotation support 63 is not prone to tilt due to unbalanced force.

Refer to FIG. 17 again with reference to FIG. 18. The drive chip 71 may be further configured to detect magnetic field strength of the second magnet 67b. It may be understood that, when the rotation support 63 rotates relative to the base 61 and the fastening support 62, the second magnet 67b also rotates relative to the base 61 and the fastening support 62 with the rotation support 63. In this case, the second magnet 67b is located at different positions relative to the base 61 and the fastening support 62. The drive chip 71 may be configured to detect magnetic field strength obtained when the second magnet 67b is at different positions. In this way, an angle at which the rotation support 63 rotates relative to the base 61 and the fastening support 62 may be determined by using the magnetic field strength detected by the drive chip 71, to accurately determine a state of the variable aperture 60, and accurately control a light flux entering the variable aperture 60.

In another implementation, the drive chip 71 may alternatively be disposed at a position facing the first magnet 67a. The drive chip 71 is configured to detect magnetic field strength obtained when the first magnet 67a is at different positions.

In another implementation, the drive chip 71 may alternatively not have a function of detecting the magnetic field strength of the second magnet 67b. The variable aperture 60 may detect the magnetic field strength obtained when the second magnet 67b is at different positions by using another manner. For example, the variable aperture 60 may include a position sensor (for example, a Hall sensor).

Refer to FIG. 14. The first reinforcement part 694 of the flexible circuit board 69 and the first magnet 67a are disposed facing each other. Because the first reinforcement part 694 uses the magnetically conductive material, a magnetic force may be generated between the first reinforcement part 694 and the first magnet 67a. In this way, the rotation support 63 may be close to a side of the fastening base 630 under the suction force, so that the rotation support 63 can be stably connected to the fastening base 630. When the rotation support 63 rotates relative to the base 61 and the fastening support 62, the rotation support 63 is not prone to tilt or shake due to external jitter. The rotation support 63 can further reduce interference caused by a posture difference of a user, and ensure that the rotation support 63 has better connection stability.

In another implementation, when the first reinforcement part 694 does not use the magnetically conductive material, the second reinforcement part 695 of the flexible circuit board may use a magnetically conductive material, and a magnetic force may be generated between the second reinforcement part 695 and the second magnet 67b.

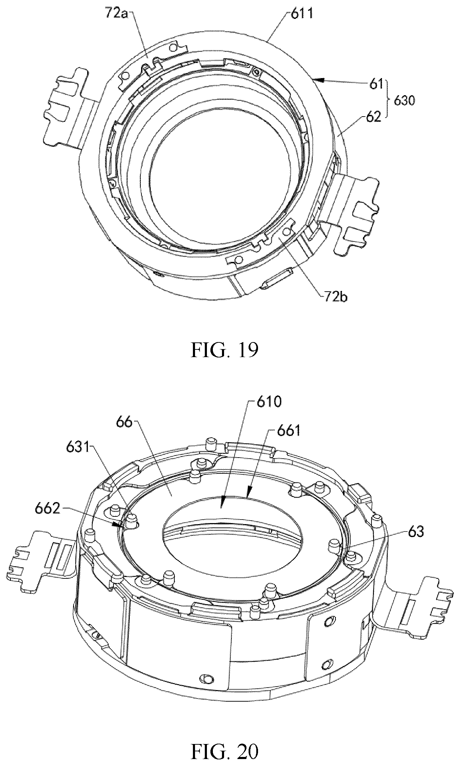

Refer to FIG. 19 with reference to FIG. 17. FIG. 19 is a schematic diagram of a partial structure of the variable aperture 60 shown in FIG. 3. The variable aperture 60 may further include a first magnetically conductive sheet 72a and a second magnetically conductive sheet 72b. The first magnetically conductive sheet 72a and the second magnetically conductive sheet 72b may be embedded in the base 61. For example, the first magnetically conductive sheet 72a and the second magnetically conductive sheet 72b are placed in a mold to form an integral part through injection molding. For example, the first magnetically conductive sheet 72a and the second magnetically conductive sheet 72b may be embedded in the bottom wall 611 of the base 61. For example, the first magnetically conductive sheet 72a may alternatively be fastened to a bottom surface of the bottom wall 611 of the base 61 in a bonding manner or the like. The second magnetically conductive sheet 72b is fastened to the bottom surface of the bottom wall 611 of the base 61.

For example, both the first magnetically conductive sheet 72a and the second magnetically conductive sheet 72b may be in an arc shape.

Refer to FIG. 19 with reference to FIG. 17. The first magnetically conductive sheet 72a is located around the first magnet 67a. A magnetic force may be generated between the first magnetically conductive sheet 72a and the first magnet 67a. The second magnetically conductive sheet 72b is located around the second magnet 67b. A magnetic force may be generated between the second magnetically conductive sheet 72b and the second magnet 67b. In this way, through fitting between the first magnetically conductive sheet 72a and the first magnet 67a, and fitting between the second magnetically conductive sheet 72b and the second magnet 67b, connections between the rotation support 63 and the base 61 and the fastening support 62 are more stable, that is, the rotation support 63 has better stability. In this way, when the rotation support 63 rotates relative to the base 61 and the fastening support 62, the rotation support 63 is not prone to tilt or shake in a rotation process.

Refer to FIG. 20 with reference to FIG. 16. FIG. 20 is a schematic diagram of a partial structure of the variable aperture 60 shown in FIG. 3. In an implementation, the first gasket 66 may be annular. The first gasket 66 has a light transmission hole 661. The light transmission hole 661 of the first gasket 66 communicates the space 610 (FIG. 16 shows the space 610 from different angles) of the rotation support 63 (FIG. 16 shows the rotation support 63 from different angles). A hole diameter of the light transmission hole 661 of the first gasket 66 does not change. The light transmission hole 661 of the first gasket 66 may be used as a gear of the aperture hole of the variable aperture 60. In this implementation, the light transmission hole 661 of the first gasket 66 may be used as an aperture hole used when the variable aperture 60 is in the end state. The following provides specific descriptions with reference to related accompanying drawings. Details are not described herein again.

For example, the first gasket 66 is provided with a plurality of fastening holes 662 disposed at intervals. For example, a quantity of the fastening holes 662 is equal to a quantity of the second bumps 631 (the rotation support 63 is shown in FIG. 16 from different angles) of the rotation support 63 (the rotation support 63 is shown in FIG. 16 from different angles), that is, there are six fastening holes 662. In addition, the plurality of fastening holes 662 may be located around the light transmission hole 661 of the first gasket 66, and are disposed around the light transmission hole 661 of the first gasket 66.

Refer to FIG. 18 with reference to FIG. 16. In an implementation, the first gasket 66 is fastened to the top of the rotation support 63. For example, the plurality of second bumps 631 of the rotation support 63 pass through the plurality of fastening holes 662 of the first gasket 66 in a one-to-one correspondence, that is, one second bump 631 passes through one fastening hole 662. It may be understood that, through fitting between the fastening hole 662 of the first gasket 66 and the second bump 631 of the rotation support 63, the first gasket 66 is not prone to shake on the X-Y plane.

In an implementation, a glue layer is disposed in the second glue storage groove 635 (the second glue storage groove 635 is shown in FIG. 16 from different angles) of the rotation support 63. The glue layer connects the rotation support 63 and the first gasket 66, so that the first gasket 66 is more stable and more firmly connected to the rotation support 63. In this case, the first gasket 66 is not easily detached from the rotation support 63.

In an implementation, a central axis of the light transmission hole 661 of the first gasket 66 coincides with a central axis of the rotation support 63. The central axis of the light transmission hole 661 of the first gasket 66 is a virtual axis that passes through a center of the light transmission hole 661 of the first gasket 66, and is perpendicular to a plane in which the first gasket 66 is located. In another embodiment, the central axis of the light transmission hole 661 of the first gasket 66 may not coincide with the central axis of the rotation support 63.

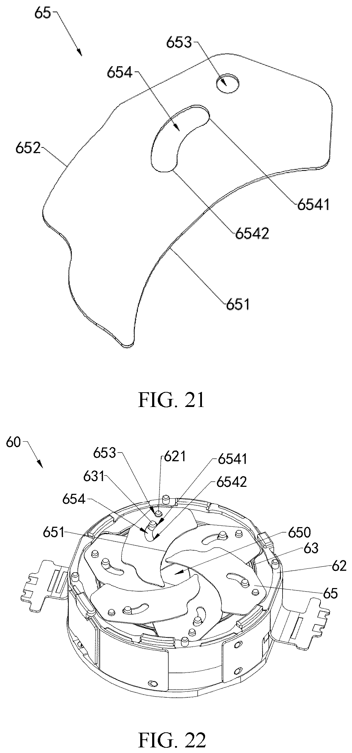

Refer to FIG. 21. FIG. 21 is a schematic diagram of a structure of the plurality of blades 65 shown in FIG. 4 from different angles. In this embodiment, the structure of the blades 65 is specifically described by taking one of the blades 65 as an example. In an implementation, a material of the blade 65 may be polyimide (polyimide, PI). In another implementation, the material of the blade 65 may alternatively be a non-magnetic metal material, for example, an aluminum sheet. In this case, hardness of the blade 65 is high.

In an implementation, a coating may be formed on a surface of the blade 65. For example, the coating is formed on the surface of the blade 65 by using a vapor deposition or sputtering process. The coating can improve smoothness of the blade 65, so that in a process of spreading and closing of the blades 65, friction between the blades 65 is small.

In an implementation, the blade 65 includes an inner edge 651 and an outer edge 652. Two ends of the inner edge 651 are connected to two ends of the outer edge 652. A joint between the inner edge 651 and the outer edge 652 is in an arc shape. For example, the inner edge 651 is in an arc shape. The outer edge 652 is in an irregular curve shape. In this implementation, the blade 65 is roughly in a "dolphin" shape. In another implementation, a shape of the blade 65 is not limited.

In an implementation, the blade 65 is provided with a rotation hole 653. For example, the rotation hole 653 may be a round hole.

In an implementation, the blade 65 is provided with a guiding hole 654. For example, the guiding hole 654 may be an arc-shaped hole. The guiding hole 654 includes a first end wall 6541 and a second end wall 6542 that are disposed facing each other. The first end wall 6541 is disposed closer than the second end wall 6542 to the rotation hole 653.

Refer to FIG. 22 with reference to FIG. 20 and FIG. 21. FIG. 22 is a schematic diagram of a partial structure of the variable aperture 60 shown in FIG. 3. In this embodiment, connection relationships between the blades 65 and the fastening support 62 and the rotation support 63 are described in detail by taking one of the blades 65 as an example. The blade 65 is rotationally connected to the fastening support 62. For example, the plurality of first bumps 621 of the fastening support 62 pass through the rotation holes 653 of the plurality of blades 65 in a one-to-one correspondence, that is, one first bump 621 of the fastening support 62 passes through the rotation hole 653 of one blade 65. It may be understood that a hole wall of the rotation hole 653 may rotate relative to the first bump 621. In this way, through fitting between the rotation hole 653 and the first bump 621, the blade 65 can rotate relative to the fastening support 62 by using the first bump 621 as a rotation shaft.

In another embodiment, positions of the first bump 621 and the rotation hole 653 may be exchanged. The first bump 621 is disposed on the blade 65. The rotation hole 653 is disposed on the fastening support 62.

In addition, the blade 65 is further slidably connected to the rotation support 63 (refer to FIG. 17). For example, the plurality of second bumps 631 of the rotation support 63 pass through the guiding holes 654 of the plurality of blades 65 in a one-to-one correspondence, that is, one second bump 631 of the rotation support 63 passes through the guiding hole 654 of one blade 65. It may be understood that the second bump 631 may slide relative to a hole wall of the guiding hole 654. In this way, through fitting between the guiding hole 654 and the second bump 631, the blade 65 may be slidably connected to the rotation support 63.

In another embodiment, positions of the second bump 631 and the guiding hole 654 may be exchanged. In other words, the second bump 631 may be disposed on the blade 65. The guiding hole 654 may be disposed on the rotation support 63.

Refer to FIG. 22 with reference to FIG. 20 and FIG. 21. The plurality of blades 65 are distributed in an annular manner, and together enclose an aperture hole 650. For example, inner edges of the plurality of blades 65 together enclose the aperture hole 650. The aperture hole 650 communicates with the light transmission hole 661 (refer to FIG. 20) of the first gasket 66. The plurality of blades 65 are located on a top of the first gasket 66. It may be understood that, because each of the blades 65 is rotationally connected to the fastening support 62, and each of the blades 65 is slidably connected to the rotation support 63, when the plurality of blades 65 are spread or closed, a hole diameter of the aperture hole 650 of the plurality of blades 65 can be increased or decreased, and a shape of the aperture hole 650 of the plurality of blades 65 changes. Certainly, in another implementation, a shape of the inner edge 651 of each of the blades 65 may be changed, so that when the plurality of blades 65 are spread or closed, the shape of the aperture hole 650 of the plurality of blades 65 does not change.

It may be understood that the first gasket 66 of this implementation is located between the blade 65 and the fastening support 62. In this way, when the blades 65 are spread or closed, the first gasket 66 can prevent the rotation support 63 from scratching the blade 65. Therefore, the first gasket 66 in this implementation has an effect of "one object for multiple purposes".

In an implementation, a central axis of the aperture hole 650 of the plurality of blades 65 coincides with the central axis of the rotation support 63. The central axis of the aperture hole 650 of the plurality of blades 65 is a virtual axis that passes through a center of the aperture hole 650 of the plurality of blades 65, and is perpendicular to a plane in which the plurality of blades 65 are located. In another embodiment, the central axis of the aperture hole 650 of the plurality of blades 65 may not coincide with the central axis of the rotation support 63.

In an implementation, when the variable aperture 60 is in the start state, the second bump 631 of the rotation support 63 is in contact with the first end wall 6541 of the guiding hole 654. When the variable aperture 60 is in the end state, the second bump 631 of the rotation support 63 is in contact with the second end wall 6542 of the guiding hole 654. When the variable aperture 60 is in the intermediate state, the second bump 631 of the rotation support 63 is located between the first end wall 6541 and the second end wall 6542 of the guiding hole 654.

In an implementation, when the variable aperture 60 is in the start state or the intermediate state, a maximum hole diameter of the aperture hole 650 of the plurality of blades 65 is less than the hole diameter of the light transmission hole 661 of the first gasket 66. In this case, the aperture hole 650 of the plurality of blades 65 forms the aperture hole of the variable aperture 60, that is, the aperture hole 650 of the plurality of blades 65 can control a light flux of ambient light. When the variable aperture 60 is in the end state, the second bump 631 of the rotation support 63 is disposed close to the second end wall 6542 of the guiding hole 654. The hole diameter of the aperture hole 650 of the plurality of blades 65 continues to increase. In this case, the light transmission hole 661 of the first gasket 66 is exposed relative to each of the blades 65, and the hole diameter of the aperture hole 650 of the plurality of blades 65 is greater than the hole diameter of the light transmission hole 661 of the first gasket 66. In this case, the light transmission hole 661 of the first gasket 66 forms the aperture hole of the variable aperture 60.

The foregoing specifically describes a connection relationship between the blade 65 and the fastening support 62 and the rotation support 63, and the following specifically describes some size settings of the blade 65.

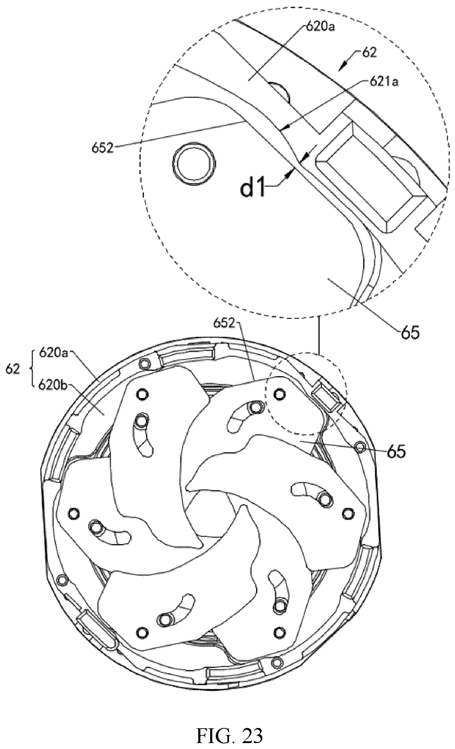

Refer to FIG. 23. FIG. 23 is a schematic diagram of a structure of the part of the variable aperture 60 shown in FIG. 22 from another angle. When the variable aperture 60 is in the start state, a distance between a part of the outer edge 652 of the blade 65 and the inner surface of the outer ring part 620a of the fastening support 62 is d1, where d1≤50 micrometers. For example, d1 is equal to 50 micrometers, 40 micrometers, 30 micrometers, 20 micrometers, 5 micrometers, or the like.

In an implementation, d1≤30 micrometers. For example, d1 is equal to 30 micrometers, 20 micrometers, 5 micrometers, or the like.

In another implementation, when the variable aperture 60 is in the end state, the distance between the part of the outer edge 652 of the blade 65 and the inner surface of the outer ring part 620a of the fastening support 62 is less than or equal to 50 micrometers.

In another implementation, when the variable aperture 60 is in the end state, the distance between the part of the outer edge 652 of the blade 65 and the inner surface of the outer ring part 620a of the fastening support 62 is less than or equal to 30 micrometers.

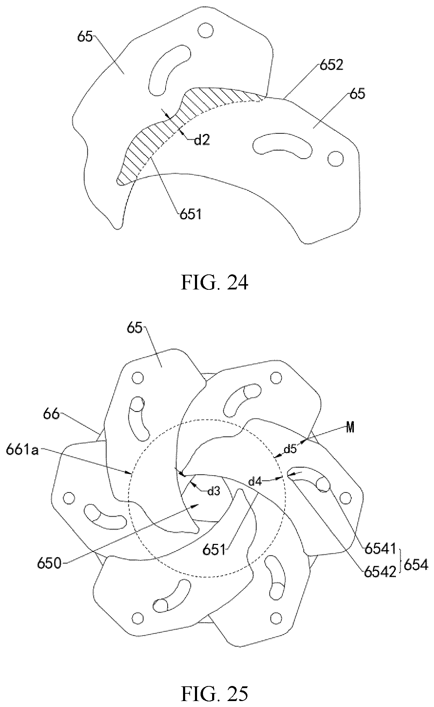

Refer to FIG. 24. FIG. 24 is a schematic diagram of a structure of two blades 65 shown in FIG. 4 corresponding to a case in which the variable aperture 60 is in the intermediate state. FIG. 24 shows that the two blades 65 overlap. FIG. 24 schematically shows an overlapping area of the two blades 65 by using a diagonal line. In addition, a part of an inner edge 651 of the left blade 65 is located at a bottom of the right blade 65, that is, the part of the inner edge 651 of the left blade 65 is shielded by the right blade 65. FIG. 24 schematically shows the part of the inner edge 651 of the left blade 65 by using a dashed line.

In this implementation, a width of an overlapping area of two adjacent blades 65 is d2. The width of the overlapping area may be a vertical distance between an inner edge 651 of a first blade 65 and an outer edge 652 of a second blade 65, where d2≥0.27 millimeters. For example, d2 is equal to 0.27 millimeters, 0.3 millimeters, 0.4 millimeters, or the like.

Refer to FIG. 25. FIG. 25 is a schematic diagram of a position relationship between the plurality of blades 65 shown in FIG. 4 and the first gasket 66. A distance between an end part that is of the inner edge 651 of the blade 65 and that is close to the aperture hole 650 and an edge of the aperture hole 650 is d3, where d3≥0.1 millimeters. For example, d3 is equal to 0.1 millimeters, 0.2 millimeters, 0.3 millimeters, or the like. In this way, the aperture hole 650 does not tend to appear in a "wind-and-fire wheel" shape.

In an implementation, FIG. 25 schematically shows the inner edge 661a of the first gasket 66 by using a dashed line. The inner edge 661a of the first gasket 66 may enclose the light transmission hole 661 of the first gasket 66. When the variable aperture 60 is in the end state, a distance between the second end wall 6542 of the guiding hole 654 of the blade 65 and the inner edge 661a of the first gasket 66 is d4, where d4≥0.2 millimeters. For example, d4 is equal to 0.2 millimeters, 0.3 millimeters, or 0.4 millimeters. In this way, light leakage at the guiding hole 654 can be avoided.

In an implementation, when the variable aperture 60 is in the end state, a distance between an intersection point M of the two adjacent blades 65 and the inner edge 661a of the first gasket 66 is d5, where d5≥0.3 millimeters. For example, d5 is equal to 0.3 millimeter, 0.4 millimeter, 0.5 millimeter, or the like. The intersection point M is far away from the aperture hole 650 enclosed by the plurality of blades 65. In this way, light leakage at the intersection point M of the two adjacent blades 65 can be avoided.

Refer to FIG. 22 again. This application defines a sensitivity (sensitivity) of the guiding hole 654. A rotation angle of the rotation support 63 is dθ. When the rotation support 63 rotates relative to the fastening support 62, a change of the diameter hole of the aperture hole 650 of the plurality of blades 65 is dD.$Sensitivity = \frac{dD}{dθ} ,$ and sensitivity ≤0.6 In this way, the guiding hole 654 can overcome a tolerance problem in a preparation process of the guiding hole 654, thereby ensuring a better matching between the guiding hole 654 and the second bump 631.

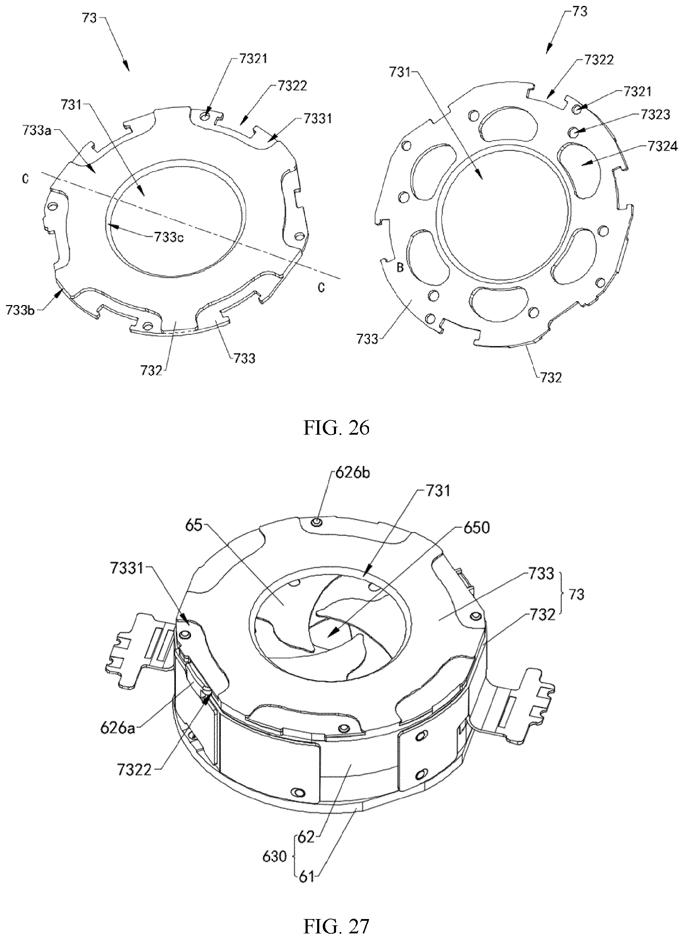

Refer to FIG. 26 with reference to FIG. 4. FIG. 26 is a schematic diagram of a structure of the upper cover 73 shown in FIG. 4 from different angles. In an implementation, the upper cover 73 may be in an annular structure. The upper cover 73 encloses a light transmission hole 731. The upper cover 73 may be an integral mechanical part, or may be a jointed mechanical part. For example, a plurality of parts are formed into an integral mechanical part in a splicing manner (for example, a mortise-and-tenon process) or a fastening manner (for example, a soldering or bonding process). This embodiment is described by using an example in which the upper cover 73 is an integral mechanical part.

In an implementation, the upper cover 73 includes a first cover body 732 and a second cover body 733. The second cover body 733 is stacked on the first cover body 732. For example, a material of the first cover body 732 is a metal material, for example, an aluminum sheet or a steel sheet. A material of the second cover body 733 may be plastic, for example, polyimide (polyimide, PI). In this way, the first cover body 732 forms a metal part of the upper cover 73. The second cover body 733 forms a plastic part of the upper cover 73. It may be understood that, compared with an upper cover of a plastic structure, the upper cover 73 of this implementation has better structure strength and a better impact resistance capability. When the variable aperture 60 falls and collides, the upper cover 73 is not easily damaged or deformed, and reliability of the upper cover 73 is better. In addition, the upper cover 73 is not likely to squeeze the blade 65 due to damage or deformation, the blade 65 is not easily damaged or deformed, and reliability of the blade 65 is better.

In an implementation, the upper cover 73 may be formed by using an insert-molding (insert-molding) process. For example, a metal material like an aluminum sheet is placed in a mold to form an integral part through injection molding. It may be understood that, compared with a solution in which the first cover body 732 is fastened to the second cover body 733 by using adhesive or another connecting part, in this implementation, the first cover body 732 and the second cover body 733 are disposed as an integral structure. In this way, a structure of the upper cover 73 can be simplified, and a quantity of components of the variable aperture 60 can be reduced. In addition, a thickness of the connecting part can be reduced, and a thickness of the upper cover 73 can be reduced, which is conducive to implementing thin setting of the variable aperture 60; and a weight of the upper cover 73 can be reduced, which is conducive to implementing lightweight setting of the variable aperture 60.

In another implementation, the first cover body 732 and the second cover body 733 of the upper cover 73 may alternatively be fastened to each other by using adhesive or in another manner.

In another implementation, the material of the second cover body 733 may alternatively be a metal material.

In an implementation, the first cover body 732 of the upper cover 73 may be provided with a fastening hole 7321. There may be one or more fastening holes 7321. When there are a plurality of fastening holes 7321, the fastening holes 7321 are disposed around the light transmission hole 731 of the upper cover 73.

In an implementation, the first cover body 732 of the upper cover 73 may be provided with a first side hole 7322. The first side hole 7322 may be located around the fastening hole 7321. There may be one or more first side holes 7322. When there are a plurality of first side holes 7322, the first side holes 7322 may be disposed around the light transmission hole 731 of the upper cover 73.

In an implementation, the second cover body 733 of the upper cover 73 is provided with a second side hole 7331. A quantity of the second side holes 7331 may be the same as a quantity of first side holes 7322. The second side hole 7331 may communicate the first side hole 7322 with the fastening hole 7321. When the second cover body 733 is stacked on the first cover body 732, the second side hole 7331 is configured to expose the fastening hole 7321 and the first side hole 7322 of the first cover body 732 to the second cover body 733.

In an implementation, the upper cover 73 is provided with a plurality of first avoidance spaces 7323 that are disposed at intervals. An opening of each first avoidance space 7323 is located on a bottom surface of the first cover body 732. The plurality of first avoidance spaces 7323 are disposed around the light transmission hole 731 of the upper cover 73. In this implementation, the first avoidance space 7323 is a groove-shaped structure.

In an implementation, the upper cover 73 is provided with a plurality of second avoidance spaces 7324. An opening of each second avoidance space 7324 is located on the bottom surface of the first cover body 732. The plurality of second avoidance spaces 7324 are disposed around the light transmission hole 731 of the upper cover 73. The plurality of second avoidance spaces 7324 and the plurality of first avoidance spaces 7323 are disposed at intervals. In this implementation, a size of the opening of the second avoidance space 7324 is greater than a size of the opening of the first avoidance space 7323. In this implementation, the second avoidance space 7324 is a groove-shaped structure.

Refer to FIG. 27. FIG. 27 is a schematic diagram of the structure of the variable aperture 60 shown in FIG. 23 from another angle. The first cover body 732 is fastened to a side that is of the fastening support 62 and that is far away from the base 61. The plurality of blades 65 are located between the first cover body 732 and the fastening support 62. In this way, in the Z-axis direction, the upper cover 73 can limit the plurality of blades 65, thereby preventing the plurality of blades 65 from falling out. In addition, the light transmission hole 731 of the upper cover 73 and the aperture hole 650 of the plurality of blades 65 are disposed facing each other. In this way, ambient light may be propagated to the aperture hole 650 of the plurality of blades 65 through the light transmission hole 731 of the upper cover 73. For example, a central axis of the light transmission hole 731 of the upper cover 73 may coincide with the central axis of the aperture hole 650 of the plurality of blades 65.

It may be understood that, as shown in FIG. 11, when the rotation support 63 is located on the inner side of the fastening base 630, the first stopper 618a can limit movement of the rotation support 63 in a negative direction of the Z axis. As shown in FIG. 27, the upper cover 73 can limit movement of the rotation support 63 in a positive direction of the Z axis. In this way, through fitting between the second stopper 626a and the upper cover 73, a motion of the rotation support 63 can be limited, and shaking of the rotation support 63 is reduced. Therefore, after the variable aperture 60 collides, impact on a gap change between the blade 65 and the upper cover 73 after collision can be alleviated.

In an implementation, the upper cover 73 is electrically connected to a ground point of the flexible circuit board 69. In this way, the first cover body 732 can reduce radio frequency interference.

Refer to FIG. 27 with reference to FIG. 26. When the upper cover 73 is fastened to the fastening support 62, the fastening block 626b of the fastening support 62 passes through the fastening hole 7321 of the upper cover 73. When there are a plurality of fastening blocks 626b and a plurality of fastening holes 7321, the plurality of fastening blocks 626b pass through the plurality of fastening holes 7321 in a one-to-one correspondence, that is, one fastening block 626b passes through one fastening hole 7321. In this way, a connection between the upper cover 73 and the fastening support 62 is more firm. In this case, the upper cover 73 is not easily detached from the fastening support 62.

For example, when the fastening block 626b of the fastening support 62 passes through the fastening hole 7321 of the upper cover 73, the fastening block 626b of the fastening support 62 may be connected to the upper cover 73 through a hot riveting process. In the hot riveting process, connection parts of two metals are changed and melted to be integral by increasing a temperature. In this way, a connection between the upper cover 73 and the fastening support 62 is more firm. In this case, the upper cover 73 is not easily detached from the fastening support 62.

Refer to FIG. 27 again with reference to FIG. 16 and FIG. 26. In an implementation, the plurality of first bumps 621 of the fastening support 62 are disposed in the plurality of first avoidance spaces 7323 of the upper cover 73 in a one-to-one correspondence. In this way, the upper cover 73 can cover the first bump 621 of the fastening support 62. Therefore, in an assembly process of the camera module 100, filaments and foreign objects can be prevented from falling into the rotation hole 653 of the blade 65 in a manufacturing process of the camera module 100, and do not affect movement of the first bump 621 in the rotation hole 653. In addition, appearance fineness of the variable aperture 60 can be improved.

In an implementation, side walls of the first avoidance spaces 7323 are disposed at a rounded angle, that is, disposed at a "C" angle. In this way, the blade 65 is not easily scratched at a joint between the side walls of the first avoidance spaces 7323.

In an implementation, the first bump 621 of the fastening support 62 may be in interference fitting with the first avoidance space 7323 of the upper cover 73. In this way, the connection between the fastening support 62 and the upper cover 73 is more stable, and the upper cover 73 and the fastening support 62 may form a structure with better integrity.

In an implementation, the plurality of second bumps 631 of the rotation support 63 are disposed in the plurality of second avoidance spaces 7324 of the upper cover 73 in a one-to-one correspondence, and the second bump 631 of the rotation support 63 may move in the second avoidance space 7324. In this way, the upper cover 73 can cover the second bump 631 of the rotation support 63. Therefore, in an assembly process of the camera module 100, filaments and foreign objects can be prevented from falling in the guiding hole 654 of the blade 65 in a manufacturing process of the camera module 100, and do not affect movement of the second bump 631 in the guiding hole 654. In addition, appearance fineness of the variable aperture 60 can be improved.

In an implementation, side walls of the second avoidance spaces 7324 are disposed at a rounded angle, that is, disposed at a "C" angle. In this way, the blade 65 is not easily scratched at a joint between the side walls of the second avoidance spaces 7324.

Refer to FIG. 27. When the upper cover 73 is fastened to the fastening support 62, the second stopper 626a of the fastening support 62 passes through the first side hole 7322 and the second side hole 7331 of the upper cover 73. The second stopper 626a of the fastening support 62 is fastened to the upper cover 73. For example, the second stopper 626a may be in interference fitting with a hole wall of the first side hole 7322. For example, a glue layer is disposed in the first side hole 7322 and the second side hole 7331, so that the fastening support 62 is stably connected to the upper cover 73.

In addition, in the Z-axis direction, the top surface of the second stopper 626a is higher than a top surface of the upper cover 73. In this way, when the variable aperture 60 is applied inside the electronic device 100, if the variable aperture 60 collides with another component of the electronic device 100, the top surface of the second stopper 626a may be used as a first impact surface, that is, the top surface of the upper cover 73 is not easily collided with the another component of the electronic device. In this case, the first bump 621 and the second bump 631 disposed at the bottom of the upper cover 73 are not easily damaged due to deformation and squeeze of the upper cover 73.

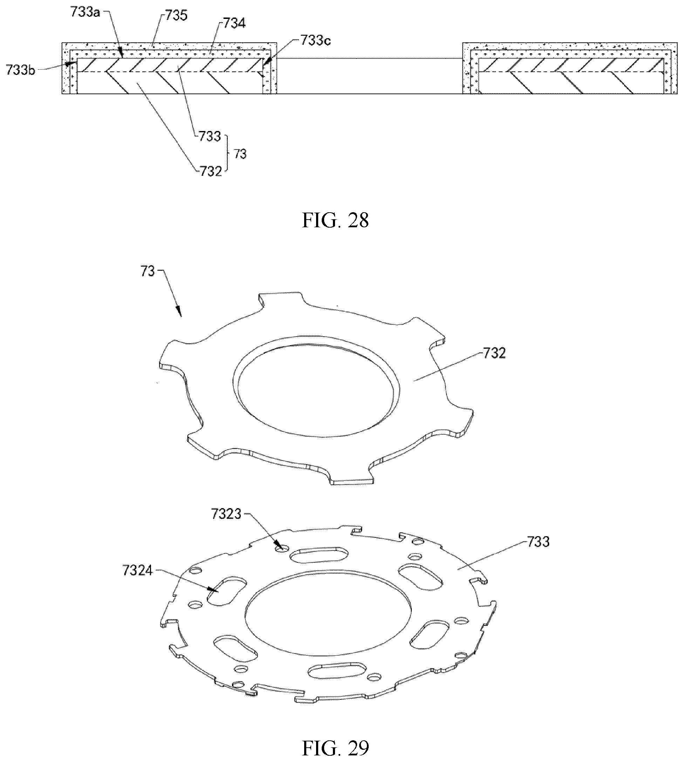

Refer to FIG. 28. FIG. 28 is schematic sectional diagram of another implementation of the upper cover 73 shown in FIG. 26 at a line C-C. The second cover body 733 includes a top surface 733a, an outer circumferential side surface 733b, and an inner circumferential side surface 733c. The top surface 733a of the second cover body 733 is connected between the outer circumferential side surface 733b and the inner circumferential side surface 733c. A coating 734 is disposed on each of the top surface 733a, the outer circumferential side surface 733b, and the inner circumferential side surface 733c of the second cover body 733. For example, the coating 734 is deposited on the top surface 733a, the outer circumferential side surface733b, and the inner circumferential side surface 733c of the second cover body 733 by using a process like a physical vapor deposition (PVD) method. The coating 734 may be black or matte black, to shield a device at the bottom of the second cover body 733, and improve appearance fineness of the variable aperture 60 to a large extent.

In an implementation, a coating 734 is deposited on a top surface, an outer circumferential side surface, and an inner circumferential side surface of the first cover body 732, to shield a device at the bottom of the first cover body 732, and improve appearance fineness of the variable aperture 60 to a large extent.

In an implementation, an anti-reflection film 735 may be disposed on a surface of the coating 734. The anti-reflection film 735 can eliminate a problem of flare (flare) to a large extent, thereby improving appearance fineness of the variable aperture 60 to a large extent.

In an implementation, no coating is disposed on the bottom surface of the first cover body 732. In this way, the bottom surface of the first cover body 732 can be directly electrically connected to the flexible circuit board 69, and is grounded by using the flexible circuit board 69. In this way, the first cover body 732 can reduce radio frequency interference.

Refer to FIG. 29. FIG. 29 is a schematic exploded view of another implementation of the upper cover 73 shown in FIG. 4. The first cover body 732 and the second cover body 733 of the upper cover 73 are formed by two independent plates. The first cover body 732 and the second cover body 733 may be fastened into an integral part through bonding or in another manner. The first avoidance space 7323 and the second avoidance space 7324 are disposed on the first cover body 732. Both the first avoidance space 7323 and the second avoidance space 7324 are of a pore structure. When the second cover body 733 fastens the first cover body 732, the second cover body 733 covers the first avoidance space 7323 and the second avoidance space 7324. A structure of the first avoidance space 7323 and the second avoidance space 7324 on the upper cover 73 is a groove structure.

The foregoing specifically describes structures of several variable apertures 60 with reference to related accompanying drawings. The size of the aperture hole 650 of the plurality of blades 65 of the variable aperture 60 can be accurately adjusted. In the variable aperture 60 of this application, the first magnet 67a and the second magnet 67b are fastened to the rotation support 63, and the first coil 68a and the second coil 68b are fastened to the fastening base 630. Therefore, when the first coil 68a and the second coil 68b are powered on, the first magnet 67a and the second magnet 67b may be in fitting with each other, to push the rotation support 63 to rotate relative to the fastening base 630. It may be understood that a structure of a driving apparatus including the first magnet 67a, the second magnet 67b, the first coil 68a, and the second coil 68b is simple. The following specifically describes several variable apertures 60 with reference to related accompanying drawings.

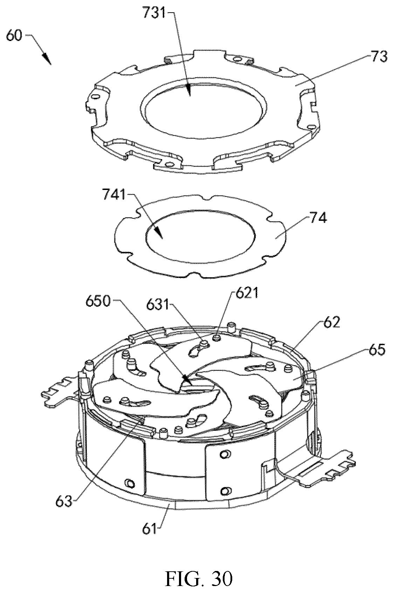

In a second implementation, technical content that is the same as that in the first implementation is not described again. Refer to FIG. 30. FIG. 30 is a partial exploded view of another implementation of the variable aperture 60 shown in FIG. 3. The variable aperture 60 further includes a second gasket 74. The second gasket 74 may be annular. The second gasket 74 has a light transmission hole 741. The light transmission hole 741 of the second gasket 74 is located between the aperture hole 650 of the blade 65 and the light transmission hole 731 of the upper cover 73, and is connected to each other. A hole diameter of the light transmission hole 741 of the second gasket 74 is greater than the hole diameter of the aperture hole 650 of the blade 65.

The second gasket 74 is fastened between the fastening support 62 and the upper cover 73. For example, the second gasket 74 may be fastened between the fastening support 62 and the upper cover 73 in an adhesive manner or the like. The plurality of blades 65 are located on a side that is of the second gasket 74 and that is far away from the upper cover 73. In this way, the second gasket 74 can separate the blade 65 from the upper cover 73, thereby preventing the upper cover 73 from scratching the blade 65.

It may be understood that an avoidance hole is disposed on the second gasket 74 or a shape of the second gasket 74 is changed, to avoid the second bump 631 of the rotation support 63 and the first bump 621 of the fastening support 62, so as to prevent mutual interference.

In another implementation, the second gasket 74 and the upper cover 73 may alternatively form an integral structure.

In another implementation, the second gasket 74 may further be fastened to the second bump 631 of the rotation support 63.

In another implementation, a protective layer may further be disposed on an outer surface of the second gasket 74, to prevent the second gasket 74 from being scratched.

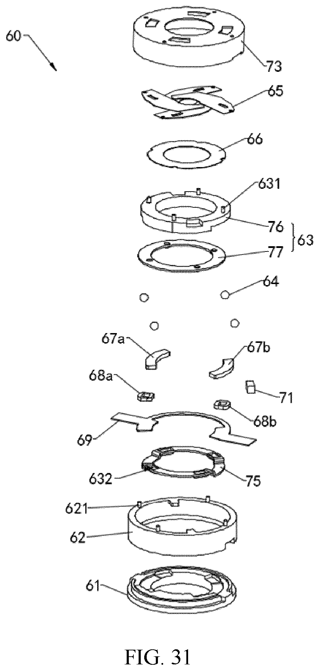

In a third implementation, technical content that is the same as that in the first implementation and the second implementation is not described again. Refer to FIG. 31. FIG. 31 is a partial exploded view of still another implementation of the variable aperture 60 shown in FIG. 3. The variable aperture 60 includes a base 61, a fastening support 62, a first fitting part 75, a rotation support 63, a plurality of roll balls 64, a plurality of blades 65, a first gasket 66, a first magnet 67a, a second magnet 67b, a first coil 68a, a second coil 68b, a flexible circuit board 69, a drive chip 71, and an upper cover 73. For a manner of disposing the blade 65, the first gasket 66, and the upper cover 73, refer to the foregoing manners of disposing the blade 65, the first gasket 66, and the upper cover 73. Details are not described herein again.

In an implementation, for material settings of the base 61, the fastening support 62, and the rotation support 63, refer to material settings of the base 61, the fastening support 62, and the rotation support 63 in the first implementation. Details are not described herein again. The fastening support 62 has a plurality of first bumps 621 disposed at intervals. The plurality of first bumps 621 may be arranged in an annular manner. A quantity of the first bumps 621 is not limited to four shown in FIG. 31. The first bump 621 may be in a column shape.

In an implementation, the base 61 and the fastening support 62 may both be annular. The fastening support 62 is fastened to the base 61. For a connection manner between the fastening support 62 and the base 61, refer to a connection manner between the base 61 and the fastening support 62 in the first implementation. Details are not described herein again.

In an implementation, the first fitting part 75 may be annular. The first fitting part 75 may use a metal material. In this way, the first fitting part 75 has better strength. The first fitting part 75 is provided with a plurality of roll grooves 632 disposed at intervals. The plurality of roll grooves 632 are distributed in an annular manner. The roll groove 632 may be in a long strip shape. An opening of the roll groove 632 is located on a top surface of the first fitting part 75. In this implementation, a quantity of the roll grooves 632 is the same as a quantity of the roll balls 64 (refer to FIG. 4), that is, there are four roll grooves 632. In another implementation, the quantity of the roll grooves 632 is not limited.

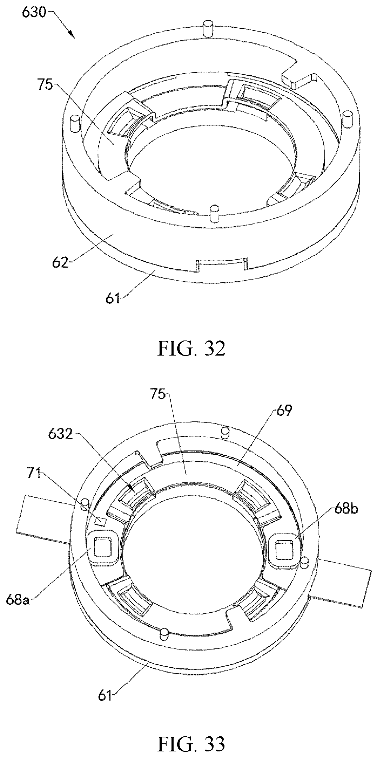

Refer to FIG. 32. FIG. 32 is a schematic diagram of assembly of the base 61, the fastening support 62, and the first fitting part 75 shown in FIG. 31. In an implementation, the first fitting part 75 is fastened to the base 61, and is located on an inner side of the fastening support 62. The first fitting part 75, the base 61, and the fastening support 62 together form a fastening base 630.

Refer to FIG. 33. FIG. 33 is a schematic diagram of assembly of a partial structure of the variable aperture 60 shown in FIG. 31. In an implementation, a part of the flexible circuit board 69 is fastened to a top of the base 61. A part of the flexible circuit board 69 is fastened to the first fitting part 75. It may be understood that the flexible circuit board 69 fastened to the first fitting part 75 is located between two roll grooves 632 of the first fitting part 75.

In addition, the first coil 68a and the second coil 68b are fastened to the flexible circuit board 69 at intervals, and are both electrically connected to the flexible circuit board 69.

In an implementation, the drive chip 71 may be fastened to the flexible circuit board 69 in a soldering manner or the like. The drive chip 71 is further electrically connected to the first coil 68a and the second coil 68b. The drive chip 71 is configured to supply power to the first coil 68a and the second coil 68b. In this implementation, the drive chip 71 is electrically connected to the flexible circuit board 69, and is electrically connected to the first coil 68a and the second coil 68b through the flexible circuit board 69.

Refer to FIG. 31 again. The rotation support 63 includes a rotation support body 76 and a second fitting part 77. A top of the rotation support body 76 has a plurality of second bumps 631 disposed at intervals. The plurality of second bumps 631 may be arranged in an annular manner. For example, there are four second bumps 631. The second bump 631 may be of a column structure.

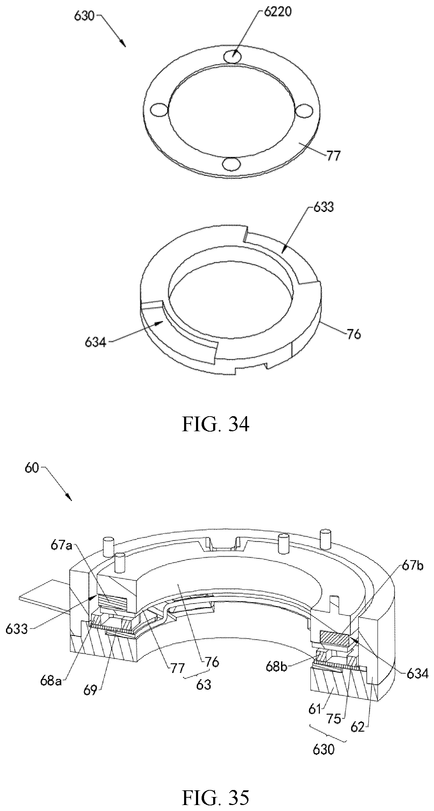

Refer to FIG. 34. FIG. 34 is a schematic diagram of a structure of the rotation support body 76 and the second fitting part 77 shown in FIG. 31 from another angle. In an implementation, a bottom of the rotation support body 76 is further provided with a first installation groove 633 and a second installation groove 634 that are disposed at intervals. Openings of the first installation groove 633 and the second installation groove 634 are both located on a bottom surface of the rotation support body 76.

In an implementation, the second fitting part 77 is provided with a plurality of rotation grooves 6220 disposed at intervals. An opening of each rotation groove 6220 is located on a bottom surface of the second fitting part 77. In this implementation, a quantity of the rotation grooves 6220 is the same as the quantity of the roll balls 64 (refer to FIG. 31), that is, there are four rotation grooves 6220. In another implementation, the quantity of the rotation grooves 6220 is not limited.

Refer to FIG. 35 with reference to FIG. 34. FIG. 35 is a partial schematic sectional diagram of the variable aperture 60 shown in FIG. 31 in a direction. In an implementation, the second fitting part 77 is fastened to the bottom of the rotation support body 76. The first magnet 67a may be fastened to the first installation groove 633 of the rotation support body 76 in an adhesive manner or the like. The second magnet 67b may be fastened to the second installation groove 634 of the rotation support body 76 in an adhesive manner or the like. The second fitting part 77 may support the first magnet 67a and the second magnet 67b.

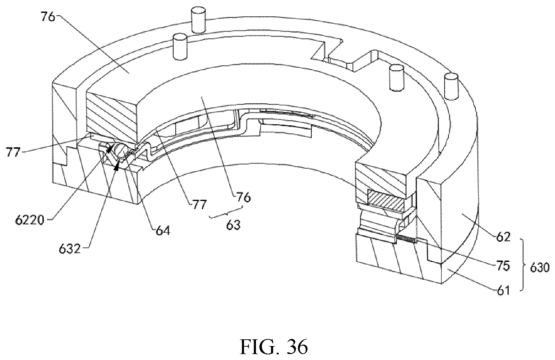

Refer to FIG. 36 with reference to FIG. 35. FIG. 36 is a partial schematic sectional diagram of the variable aperture 60 shown in FIG. 31 in another direction. The rotation support 63 is rotationally connected to the fastening base 630. The rotation support 63 is disposed on the inner side of the fastening support 62. The rotation support 63 is rotationally connected to the fastening base 630.

The plurality of rotation grooves 6220 and the plurality of roll grooves 632 are disposed facing each other in a one-to-one correspondence, and are assembled into a movable space. That is, one rotation groove 6220 and one roll groove 632 are disposed facing each other, and are assembled into a movable space. One part of the roll ball 64 is disposed in the rotation groove 6220, and the other part of the roll ball 64 is located in the roll groove 632.

In another implementation, the roll ball 64 and the rotation support 63 may alternatively form an integral structure. In this way, the roll ball 64 slides in the roll groove 632 of the first fitting part 75.

Refer to FIG. 35 again. The first coil 68a and the first magnet 67a are disposed facing each other. The second coil 68b and the second magnet 67b are disposed facing each other. In this implementation, when the drive chip 71 receives a signal, the drive chip 71 may transmit a current signal to the first coil 68a and the second coil 68b by using the flexible circuit board 69. When there is a current signal in the first coil 68a, the first coil 68a and the first magnet 67a may generate forces acting on each other. In this way, when an acting force is applied to the first magnet 67a, the first magnet 67a can drive the rotation support 63 to rotate relative to the base 61 and the fastening support 62. Further, when there is a current signal in the second coil 68b, the second coil 68b and the second magnet 67b may generate forces acting on each other. In this way, when an acting force is applied to the second magnet 67b, the second magnet 67b can drive the rotation support 63 to rotate relative to the fastening support 62 and the base 61.

In an implementation, the variable aperture 100 may further include a first magnetically conductive sheet (not shown in the figure) and a second magnetically conductive sheet (not shown in the figure). The first magnetically conductive sheet and the second magnetically conductive sheet may be embedded in the base 61. The first magnetically conductive sheet is located around the first magnet 67a. A magnetic force may be generated between the first magnetically conductive sheet and the first magnet 67a. The second magnetically conductive sheet is located around the second magnet 67b. A magnetic force may be generated between the second magnetically conductive sheet and the second magnet 67b. In this way, through fitting between the first magnetically conductive sheet and the first magnet 67a, and fitting between the second magnetically conductive sheet and the second magnet 67b, connections between the rotation support 63 and the base 61 and the fastening support 62 are more stable, that is, the rotation support 63 has better stability. In this way, when the rotation support 63 rotates relative to the base 61 and the fastening support 62, the rotation support 63 is not prone to tilt or shake in a rotation process.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A variable aperture (60), comprising a fastening base (630), a rotation support (63), a plurality of blades (65), and a first cover body (732), wherein
the rotation support (63) is located on an inner side of the fastening base (630), and is rotationally connected to the fastening base (630), and the rotation support (63) encloses a space (610);
the plurality of blades (65) together enclose an aperture hole (650), the aperture hole (650) communicates with the space (610), and each of the blades (65) is rotationally connected to the fastening base (630) and is slidably connected to the rotation support (63); and
the first cover body (732) is fastened to the fastening base (630), and is located on a side that is of the blade (65) and that is far away from the fastening base (630), and a material of the first cover body (732) is a metal material;
wherein a width of an overlapping area of two adjacent blades (65) is d2, and the width of the overlapping area is a vertical distance between an inner edge (651) of a first blade (65) and an outer edge (652) of a second blade (65), wherein d2≥0.27 millimeters,
wherein a distance between an end part that is of the inner edge (651) of the blade (65) and that is close to the aperture hole (650) and an edge of the aperture hole (650) is d3, wherein d3≥0.1 millimeters, and
**characterized in that**
the variable aperture (60) further comprises a first gasket (66), the first gasket (66) is fastened to the rotation support (63) and is located on a side that is of the plurality of blades (65) and that faces the rotation support (63), an inner edge (661a) of the first gasket (66) encloses a light transmission hole (661), and the light transmission hole (661) of the first gasket (66) communicates the aperture hole (650) of the plurality of blades (65) with the space (610) of the rotation support (63).

2. The variable aperture (60) according to claim 1, wherein the first cover body (732) is provided with a fastening hole (7321), the fastening base (630) is provided with a fastening block (626b), and the fastening block (626b) is hot-riveted in the fastening hole (7321).

3. The variable aperture (60) according to claim 1 or 2, wherein the fastening base (630) has a plurality of first bumps (621) disposed at intervals, and the rotation support (63) has a plurality of second bumps (631) disposed at intervals;
each of the blades (65) is provided with a rotation hole (653) and a guiding hole (654) that are disposed at intervals, the plurality of first bumps (621) are rotationally connected to the rotation holes (653) of the plurality of blades (65) in a one-to-one correspondence, and the plurality of second bumps (631) are slidably connected to the guiding holes (654) of the plurality of blades (65) in a one-to-one correspondence; and
the first cover body (732) is provided with a plurality of first avoidance spaces (7323) that are disposed at intervals and a plurality of second avoidance spaces (7324) that are disposed at intervals, the plurality of first bumps (621) are disposed in the first avoidance spaces (7323) in a one-to-one correspondence, and the plurality of second bumps (631) are disposed in the second avoidance spaces (7324) in a one-to-one correspondence.

4. The variable aperture (60) according to claim 3, wherein the variable aperture (60) further comprises a second cover body (733), the second cover body (733) fastens the first cover body (732) and is located on a side that is of the first cover body (732) and that is far away from the blade (65), and the second cover body (733) covers the first avoidance space (7323) and the second avoidance space (7324).

5. The variable aperture (60) according to claim 4, wherein a coating (734) is disposed on each of a top surface (733a), an outer circumferential side surface (733b), and an inner circumferential side surface (733c) of the second cover body (733).

6. The variable aperture (60) according to claim 5, wherein a surface of the coating (734) is provided with an anti-reflection film (735)

7. The variable aperture (60) according to any one of claims 1 to 6, wherein the variable aperture (60) comprises a flexible circuit board (69), a first magnet (67a), and a first coil (68a); and
the flexible circuit board (69) is wound around an outer circumferential side surface of the fastening base (630) and is fastened to the outer circumferential side surface of the fastening base (630), the first coil (68a) is fastened to an inner circumferential side surface of the flexible circuit board (69) and is electrically connected to the flexible circuit board (69), the first magnet (67a) is fastened to an outer circumferential side surface (630a) of the rotation support (63), the first coil (68a)
faces the first magnet (67a), the first magnet (67a) is configured to drive, in fitting with the first coil (68a), the rotation support (63) to rotate relative to the fastening base (630), and each of the blades (65) slides relative to the rotation support (63) and rotates relative to the fastening base (630), and a hole diameter of the aperture hole (650) of the plurality of blades (65) changes.

8. The variable aperture (60) according to claim 7, wherein the flexible circuit board (69) comprises a main part (691) and a first reinforcement part (694), the first reinforcement part (694) is fastened to a surface of a first segment (6911) of the main part (691), and the first coil (68a) is fastened to the first segment (6911) and is disposed facing the first reinforcement part (694); and
a material of at least a part of the first reinforcement part (694) is a magnetically conductive material, and the first reinforcement part (694) and the first magnet (67a) generate a suction force.

9. The variable aperture (60) according to any one of claims 1 to 8, wherein when the variable aperture (60) is in an initial state, the hole diameter of the aperture hole (650) is the smallest, and a minimum distance between an outer edge (652) of the blade (65) and a step surface (621a) of the fastening base (630) is d1, wherein d1≤50 micrometers, and the step surface (621a) faces the aperture hole (650).

10. The variable aperture (60) according to any one of claims 1 to 9, wherein the variable aperture (60) comprises an initial state, an intermediate state, and an end state;
when the variable aperture (60) is in the initial state or the intermediate state, a maximum hole diameter of the aperture hole (650) of the plurality of blades (65) is less than a hole diameter of the light transmission hole (661) of the first gasket (66); and
when the variable aperture (60) is in the end state, a minimum hole diameter of the aperture hole (650) of the plurality of blades (65) is greater than or equal to the hole diameter of the light transmission hole (661) of the first gasket (66).

11. The variable aperture (60) according to claim 10, wherein when the variable aperture (60) is in the end state, a distance between a second end wall (6542) of the guiding hole (654) of the blade (65) and the inner edge (661a) of the first gasket (66) is d4, wherein d4≥0.2 millimeters.

12. The variable aperture (60) according to claim 10, wherein when the variable aperture (60) is in the end state, a distance between an intersection point of two adjacent blades (65) and the inner edge (661a) of the first gasket (66) is d5, wherein d5≥0.3 millimeters.

13. The variable aperture (60) according to any one of claims 1 to 12, wherein a sensitivity of the guiding hole (654) is sensitivity, a rotation angle of the rotation support (63) is dθ, and when the rotation support (63) rotates relative to the fastening support (62), a change of the hole diameter of the aperture hole (650) of the plurality of blades (65) is dD, wherein $sensitivity = \frac{dD}{dθ} , and sensitivity ⩽ 0.6 .$

14. A camera module (100), comprising a lens assembly (50) and the variable aperture (60) according to any one of claims 1 to 13, wherein the variable aperture (60) is fastened to the lens assembly (50) and is located on a light inlet side of the lens assembly (50).

15. An electronic device (1), comprising a housing (200) and the camera module (100) according to claim 14, wherein the camera module (100) is disposed in the housing (200).

## Patentansprüche

1. Variable Blende (60), die eine Befestigungsbasis (630), einen Drehträger (63), mehrere Lamellen (65) und einen ersten Abdeckkörper (732) umfasst, wobei
sich der Drehträger (63) an einer Innenseite der Befestigungsbasis (630) befindet und mit der Befestigungsbasis (630) drehbar verbunden ist, und der Drehträger (63) einen Raum (610) umschließt;
die mehreren Lamellen (65) zusammen ein Blendenloch (650) umschließen, das Blendenloch (650) mit dem Raum (610) verbunden ist und jede der Lamellen (65) drehbar mit der Befestigungsbasis (630) verbunden ist und verschiebbar mit dem Drehträger (63) verbunden ist; und
der erste Abdeckkörper (732) an der Befestigungsbasis (630) befestigt ist und sich auf einer Seite befindet, die zu der Lamelle (65) gehört und die weit von der Befestigungsbasis (630) entfernt ist, und ein Material des ersten Abdeckkörpers (732) ein Metallmaterial ist;
wobei eine Breite eines überlappenden Bereichs von zwei benachbarten Lamellen (65) d2 ist und die Breite des überlappenden Bereichs ein vertikaler Abstand zwischen einer Innenkante (651) einer ersten Lamelle (65) und einer Außenkante (652) einer zweiten Lamelle (65) ist, wobei d2 ≥ 0,27 Millimeter ist,
wobei ein Abstand zwischen einem Endteil, der zu der Innenkante (651) der Lamelle (65) gehört und der nahe dem Blendenloch (650) liegt, und einer Kante des Blendenlochs (650) d3 ist, wobei d3 ≥ 0,1 Millimeter ist, und
**dadurch gekennzeichnet, dass**
die variable Blende (60) ferner eine erste Dichtung (66) umfasst, die erste Dichtung (66) an dem Drehträger (63) befestigt ist und sich auf einer Seite befindet, die zu den mehreren Lamellen (65) gehört und die dem Drehträger (63) zugewandt ist, eine Innenkante (661a) der ersten Dichtung (66) ein Lichttransmissionsloch (661) umschließt und das Lichttransmissionsloch (661) der ersten Dichtung (66) das Blendenloch (650) der mehreren Lamellen (65) mit dem Raum (610) des Drehträgers (63) verbindet.

2. Variable Blende (60) nach Anspruch 1, wobei der erste Abdeckkörper (732) mit einem Befestigungsloch (7321) versehen ist, die Befestigungsbasis (630) mit einem Befestigungsblock (626b) versehen ist und der Befestigungsblock (626b) in dem Befestigungsloch (7321) warmgenietet ist.

3. Variable Blende (60) nach Anspruch 1 oder 2, wobei die Befestigungsbasis (630) mehrere erste Höcker (621) aufweist, die in Intervallen angeordnet sind, und der Drehträger (63) mehrere zweite Höcker (631) aufweist, die in Intervallen angeordnet sind;
jede der Lamellen (65) mit einem Drehloch (653) und einem Führungsloch (654) versehen ist, die in Intervallen angeordnet sind, die mehreren ersten Höcker (621) mit den Drehlöchern (653) der mehreren Lamellen (65) in einer eineindeutigen Entsprechung drehbar verbunden sind und die mehreren zweiten Höcker (631) mit den Führungslöchern (654) der mehreren Lamellen (65) in einer eineindeutigen Entsprechung verschiebbar verbunden sind; und
der erste Abdeckkörper (732) mit mehreren ersten Ausweichräumen (7323), die in Intervallen angeordnet sind, und mehreren zweiten Ausweichräumen (7324), die in Intervallen angeordnet sind, versehen ist, die mehreren ersten Höcker (621) in den ersten Ausweichräumen (7323) in einer eineindeutigen Entsprechung angeordnet sind und die mehreren zweiten Höcker (631) in den zweiten Ausweichräumen (7324) in einer eineindeutigen Entsprechung angeordnet sind.

4. Variable Blende (60) nach Anspruch 3, wobei die variable Blende (60) ferner einen zweiten Abdeckkörper (733) umfasst, der zweite Abdeckkörper (733) den ersten Abdeckkörper (732) befestigt und sich auf einer Seite befindet, die zu dem ersten Abdeckkörper (732) gehört und die weit von der Lamelle (65) entfernt ist, und der zweite Abdeckkörper (733) den ersten Ausweichraum (7323) und den zweiten Ausweichraum (7324) bedeckt.

5. Variable Blende (60) nach Anspruch 4, wobei eine Beschichtung (734) auf jeweils einer oberen Oberfläche (733a), einer äußeren Umfangsseitenoberfläche (733b) und einer inneren Umfangsseitenoberfläche (733c) des zweiten Abdeckkörpers (733) aufgebracht ist.

6. Variable Blende (60) nach Anspruch 5, wobei eine Oberfläche der Beschichtung (734) mit einem Antireflexionsfilm (735) versehen ist.

7. Variable Blende (60) nach einem der Ansprüche 1 bis 6, wobei die variable Blende (60) eine flexible Leiterplatte (69), einen ersten Magneten (67a) und eine erste Spule (68a) umfasst; und
die flexible Leiterplatte (69) um eine äußere Umfangsseitenfläche der Befestigungsbasis (630) gewickelt ist und an der äußeren Umfangsseitenfläche der Befestigungsbasis (630) befestigt ist, die erste Spule (68a) an einer inneren Umfangsseitenfläche der flexiblen Leiterplatte (69) befestigt ist und elektrisch mit der flexiblen Leiterplatte (69) verbunden ist, der erste Magnet (67a) an einer äußeren Umfangsseitenfläche (630a) des Drehträgers (63) befestigt ist, die erste Spule (68a) dem ersten Magneten (67a) zugewandt ist, der erste Magnet (67a) dazu ausgelegt ist, durch Passung mit der ersten Spule (68a), den Drehträger (63) so anzutreiben, dass er sich relativ zu der Befestigungsbasis (630) dreht, und jede der Lamellen (65) relativ zu dem Drehträger (63) gleitet und sich relativ zu der Befestigungsbasis (630) dreht, und sich ein Lochdurchmesser des Blendenlochs (650) der mehreren Lamellen (65) ändert.

8. Variable Blende (60) nach Anspruch 7, wobei die flexible Leiterplatte (69) ein Hauptteil (691) und ein erstes Verstärkungsteil (694) umfasst, das erste Verstärkungsteil (694) an einer Oberfläche eines ersten Segments (6911) des Hauptteils (691) befestigt ist und die erste Spule (68a) an dem ersten Segment (6911) befestigt ist und dem ersten Verstärkungsteil (694) zugewandt angeordnet ist; und
ein Material mindestens eines Teils des ersten Verstärkungsteils (694) ein magnetisch leitfähiges Material ist und das erste Verstärkungsteil (694) und der erste Magnet (67a) eine Saugkraft erzeugen.

9. Variable Blende (60) nach einem der Ansprüche 1 bis 8, wobei, wenn sich die variable Blende (60) in einem Anfangszustand befindet, der Lochdurchmesser des Blendenlochs (650) am kleinsten ist und ein minimaler Abstand zwischen einer Außenkante (652) der Lamelle (65) und einer Stufenoberfläche (621a) der Befestigungsbasis (630) dl ist, wobei d1 ≤ 50 Mikrometer ist und die Stufenoberfläche (621a) dem Blendenloch (650) zugewandt ist.

10. Variable Blende (60) nach einem der Ansprüche 1 bis 9, wobei die variable Blende (60) einen Anfangszustand, einen Zwischenzustand und einen Endzustand umfasst;
wenn sich die variable Blende (60) in dem Anfangszustand oder dem Zwischenzustand befindet, ein maximaler Lochdurchmesser des Blendenlochs (650) der mehreren Lamellen (65) kleiner als ein Lochdurchmesser des Lichttransmissionslochs (661) der ersten Dichtung (66) ist; und
wenn sich die variable Blende (60) in dem Endzustand befindet, ein minimaler Lochdurchmesser des Blendenlochs (650) der mehreren Lamellen (65) größer oder gleich dem Lochdurchmesser des Lichttransmissionslochs (661) der ersten Dichtung (66) ist.

11. Variable Blende (60) nach Anspruch 10, wobei, wenn sich die variable Blende (60) in dem Endzustand befindet, ein Abstand zwischen einer zweiten Endwand (6542) des Führungslochs (654) der Lamelle (65) und der Innenkante (661a) der ersten Dichtung (66) d4 ist, wobei d4 ≥ 0,2 Millimeter ist.

12. Variable Blende (60) nach Anspruch 10, wobei, wenn sich die variable Blende (60) in dem Endzustand befindet, ein Abstand zwischen einem Schnittpunkt zweier benachbarter Lamellen (65) und der Innenkante (661a) der ersten Dichtung (66) d5 ist, wobei d5 ≥ 0,3 Millimeter ist.

13. Variable Blende (60) nach einem der Ansprüche 1 bis 12, wobei eine Empfindlichkeit des Führungslochs (654) Empfindlichkeit ist, ein Drehwinkel des Drehträgers (63) dθ ist und, wenn sich der Drehträger (63) relativ zu dem Befestigungsträger (62) dreht, eine Änderung des Lochdurchmessers des Blendenlochs (650) der mehreren Lamellen (65) dD ist, wobei $Empfindlichkeit = \frac{dD}{dθ}$ ist und Empfindlichkeit ≤ 0,6 ist.

14. Kameramodul (100), umfassend eine Objektivbaugruppe (50) und die variable Blende (60) nach einem der Ansprüche 1 bis 13, wobei die variable Blende (60) an der Objektivbaugruppe (50) befestigt ist und sich auf einer Lichteinlassseite der Objektivbaugruppe (50) befindet.

15. Elektronische Vorrichtung (1), umfassend ein Gehäuse (200) und das Kameramodul (100) nach Anspruch 14, wobei das Kameramodul (100) in dem Gehäuse (200) angeordnet ist.

## Revendications

1. Ouverture variable (60), comprenant une embase de fixation (630), un support de rotation (63), une pluralité de lames (65) et un premier corps de couvercle (732), dans laquelle
le support de rotation (63) est situé sur un côté intérieur de l'embase de fixation (630) et est relié avec faculté de rotation à l'embase de fixation (630), et le support de rotation (63) délimite un espace (610) ;
la pluralité de lames (65) délimitent ensemble un trou d'ouverture (650), le trou d'ouverture (650) communique avec l'espace (610), et chacune des lames (65) est reliée avec faculté de rotation à l'embase de fixation (630) et est reliée avec faculté de coulissement au support de rotation (63) ; et
le premier corps de couvercle (732) est fixé à l'embase de fixation (630) et est situé sur un côté qui est celui de la lame (65) et qui est éloigné de l'embase de fixation (630), et un matériau du premier corps de couvercle (732) est un matériau métallique ;
dans laquelle une largeur d'une zone de chevauchement de deux lames adjacentes (65) est d2, et la largeur de la zone de chevauchement est une distance verticale entre un bord intérieur (651) d'une première lame (65) et un bord extérieur (652) d'une deuxième lame (65), avec d2 ≥ 0,27 mm,
dans laquelle une distance entre une partie d'extrémité qui est celle du bord intérieur (651) de la lame (65) et qui est proche du trou d'ouverture (650) et un bord du trou d'ouverture (650) est d3, avec d3 ≥ 0,1 mm, et
**caractérisée en ce que**
l'ouverture variable (60) comprend en outre un premier joint d'étanchéité (66), le premier joint d'étanchéité (66) est fixé au support de rotation (63) et est situé sur un côté qui est celui de la pluralité de lames (65) et qui fait face au support de rotation (63), un bord intérieur (661a) du premier joint d'étanchéité (66) délimite un trou de transmission de lumière (661), et le trou de transmission de lumière (661) du premier joint d'étanchéité (66) fait communiquer le trou d'ouverture (650) de la pluralité de lames (65) avec l'espace (610) du support de rotation (63).

2. Ouverture variable (60) selon la revendication 1, dans laquelle le premier corps de couvercle (732) est pourvu d'un trou de fixation (7321), l'embase de fixation (630) est pourvue d'un bloc de fixation (626b), et le bloc de fixation (626b) est riveté à chaud dans le trou de fixation (7321).

3. Ouverture variable (60) selon la revendication 1 ou 2, dans laquelle l'embase de fixation (630) comporte une pluralité de premières bosses (621) disposées à intervalles, et le support de rotation (63) comporte une pluralité de deuxièmes bosses (631) disposées à intervalles ;
chacune des lames (65) est pourvue d'un trou de rotation (653) et d'un trou de guidage (654) qui sont disposés à intervalles, la pluralité de premières bosses (621) sont reliées avec faculté de rotation aux trous de rotation (653) de la pluralité de lames (65) dans une correspondance biunivoque, et la pluralité de deuxièmes bosses (631) sont reliées avec faculté de coulissement aux trous de guidage (654) de la pluralité de lames (65) dans une correspondance biunivoque ; et
le premier corps de couvercle (732) est pourvu d'une pluralité de premiers espaces d'évitement (7323) qui sont disposés à intervalles et d'une pluralité de deuxièmes espaces d'évitement (7324) qui sont disposés à intervalles, la pluralité de premières bosses (621) sont disposées dans les premiers espaces d'évitement (7323) dans une correspondance biunivoque, et la pluralité de deuxièmes bosses (631) sont disposées dans les deuxièmes espaces d'évitement (7324) dans une correspondance biunivoque.

4. Ouverture variable (60) selon la revendication 3, l'ouverture variable (60) comprenant en outre un deuxième corps de couvercle (733), le deuxième corps de couvercle (733) fixant le premier corps de couvercle (732) et étant situé sur un côté qui est celui du premier corps de couvercle (732) et qui est éloigné de la lame (65), et le deuxième corps de couvercle (733) recouvrant le premier espace d'évitement (7323) et le deuxième espace d'évitement (7324).

5. Ouverture variable (60) selon la revendication 4, dans laquelle un revêtement (734) est disposé à la fois sur une surface supérieure (733a), sur une surface latérale circonférentielle extérieure (733b) et sur une surface latérale circonférentielle intérieure (733c) du deuxième corps de couvercle (733).

6. Ouverture variable (60) selon la revendication 5, dans laquelle une surface du revêtement (734) est pourvue d'un film antireflet (735).

7. Ouverture variable (60) selon l'une quelconque des revendications 1 à 6, l'ouverture variable (60) comprenant une carte de circuit souple (69), un premier aimant (67a), et une première bobine (68a) ; et
la carte de circuit souple (69) étant enroulée autour d'une surface latérale circonférentielle extérieure de l'embase de fixation (630) et étant fixée à la surface latérale circonférentielle extérieure de l'embase de fixation (630), la première bobine (68a) étant fixée à une surface latérale circonférentielle intérieure de la carte de circuit souple (69) et étant reliée électriquement à la carte de circuit souple (69), le premier aimant (67a) étant fixé à une surface latérale circonférentielle extérieure (630a) du support de rotation (63), la première bobine (68a) faisant face au premier aimant (67a), le premier aimant (67a) étant conçu pour entraîner, en coopération avec la première bobine (68a), le support de rotation (63) afin qu'il tourne par rapport à l'embase de fixation (630), et chacune des lames (65) coulissant par rapport au support de rotation (63) et tournant par rapport à l'embase de fixation (630), et un diamètre de trou du trou d'ouverture (650) de la pluralité de lames (65) variant.

8. Ouverture variable (60) selon la revendication 7, dans laquelle la carte de circuit souple (69) comprend une partie principale (691) et une première partie de renforcement (694), la première partie de renforcement (694) est fixée à une surface d'un premier segment (6911) de la partie principale (691), et la première bobine (68a) est fixée au premier segment (6911) et est disposée en face de la première partie de renforcement (694) ; et
un matériau d'au moins une partie de la première partie de renforcement (694) est un matériau magnétiquement conducteur, et la première partie de renforcement (694) et le premier aimant (67a) génèrent une force d'aspiration.

9. Ouverture variable (60) selon l'une quelconque des revendications 1 à 8 dans laquelle, lorsque l'ouverture variable (60) se trouve dans un état initial, le diamètre de trou du trou d'ouverture (650) est le plus petit, et une distance minimale entre un bord extérieur (652) de la lame (65) et une surface de marche (621a) de l'embase de fixation (630) est d1, avec d1 ≤ 50 µm, et la surface de marche (621a) fait face au trou d'ouverture (650).

10. Ouverture variable (60) selon l'une quelconque des revendications 1 à 9, l'ouverture variable (60) présentant un état initial, un état intermédiaire et un état final ;
lorsque l'ouverture variable (60) se trouve dans l'état initial ou l'état intermédiaire, un diamètre maximal de trou du trou d'ouverture (650) de la pluralité de lames (65) étant inférieur à un diamètre de trou du trou de transmission de lumière (661) du premier joint d'étanchéité (66) ; et
lorsque l'ouverture variable (60) se trouve dans l'état final, un diamètre minimal de trou du trou d'ouverture (650) de la pluralité de lames (65) étant supérieur ou égal au diamètre de trou du trou de transmission de lumière (661) du premier joint d'étanchéité (66).

11. Ouverture variable (60) selon la revendication 10 dans laquelle, lorsque l'ouverture variable (60) se trouve dans l'état final, une distance entre une deuxième paroi d'extrémité (6542) du trou de guidage (654) de la lame (65) et le bord intérieur (661a) du premier joint d'étanchéité (66) est d4, avec d4 ≥ 0,2 mm.

12. Ouverture variable (60) selon la revendication 10 dans laquelle, lorsque l'ouverture variable (60) se trouve dans l'état final, une distance entre un point d'intersection de deux lames adjacentes (65) et le bord intérieur (661a) du premier joint d'étanchéité (66) est d5, avec d5 ≥ 0,3mm.

13. Ouverture variable (60) selon l'une quelconque des revendications 1 à 12, dans laquelle une sensibilité du trou de guidage (654) est désignée sensibilité, un angle de rotation du support de rotation (63) est désigné dθ, et lorsque le support de rotation (63) tourne par rapport au support de fixation (62), une variation du diamètre de trou du trou d'ouverture (650) de la pluralité de lames (65) est dD, avec $sensibilité = \frac{dD}{dθ}$, et sensibilité ≤ 0,6.

14. Module de caméra (100), comprenant un ensemble lentille (50) et l'ouverture variable (60) selon l'une quelconque des revendications 1 à 13, l'ouverture variable (60) étant fixée à l'ensemble lentille (50) et étant située sur un côté entrée de lumière de l'ensemble lentille (50).

15. Dispositif électronique (1), comprenant un boîtier (200) et le module de caméra (100) selon la revendication 14, le module de caméra (100) étant disposé dans le boîtier (200).
